# EUROPEAN PATENT APPLICATION

(11) **EP 4 224 915 A1**
(43) Date of publication of application: **09.08.2023**
(21) Application number: 21881438.2
(22) Date of filing: 15.01.2021
(51) Int. Cl.: H04W 24/10, H04W 72/04

(54) **MEASUREMENT REPORTING METHOD AND APPARATUS**

(30) Priority: 23.10.2020 WO PCT/CN2020/123454
(71) Applicant: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN); LI, Shengyu, Shenzhen, Guangdong 518129 (CN)
(74) Representative: Isarpatent
(86) International application number: PCT/CN2021/072250
(87) International publication number: WO 2022/083012

(57) **Abstract**

Embodiments of this application disclose a measurement reporting method and an apparatus, and relate to the field of communication technologies. When a preset condition is met, a terminal device may complete CSI measurement and reporting in shorter time, so that a network device can obtain channel information in a timely manner, and can perform more accurate data scheduling, to improve reliability of service data transmission.

## Description

This application claims priority to International Patent Application No. PCT/CN2020/123454, filed with the China National Intellectual Property Administration on October 23, 2020 and entitled "MEASUREMENT REPORTING METHOD AND APPARATUS", which is incorporated herein by reference in its entirety.

### TECHNICAL FIELD

Embodiments of this application relate to the field of communication technologies, and in particular, to a measurement reporting method and an apparatus.

### BACKGROUND

The 5G communication system has high requirements on a transmission rate, a delay, power consumption, and the like, and can support good system performance. In addition, the 5G communication system can support a plurality of service types, different deployment scenarios, and a wide spectrum range. The 5G communication system includes three typical application scenarios: an enhanced mobile broadband (enhanced mobile broadband, eMBB) scenario, a massive machine type communication (massive machine type communication, mMTC) scenario, and an ultra-reliable and low-latency communication (ultra-reliable and low latency communications, URLLC) scenario.

In a downlink data transmission process, a terminal device may estimate channel state information (channel state information, CSI) by using a reference signal received by the terminal device from a network device, for example, a channel state information-reference signal (channel state information-reference signal, CSI-RS), that is, measure the CSI, and send obtained CSI to the network device, so that the network device sends downlink information to the terminal device by using the CSI, to improve data transmission reliability. However, a CSI processing delay defined in the conventional technology is long. As a result, the CSI fed back by the terminal device to the network device is out-of-date (out-of-date) CSI. The out-of-date CSI cannot be used to accurately describe a current channel environment. For example, in the URLLC scenario, out-of-date CSI may affect high reliability and low latency characteristics of a URLLC service. Due to a high reliability requirement of URLLC, the URLLC service usually has only a few retransmission opportunities. For example, when a CSI processing delay is 1 ms, the URLLC service has only one retransmission opportunity. Therefore, when the network device receives the out-of-date CSI and sends a data packet to the terminal device based on the out-of-date CSI, the terminal device may fail to correctly receive the data packet sent by the network device, and therefore the reliability requirement of the URLLC service cannot be met. In conclusion, how to reduce a CSI processing delay is an urgent technical problem that needs to be resolved currently.

### SUMMARY

This application provides a measurement reporting method and an apparatus, to determine, based on a first processing delay determined when a preset condition is met, CSI feedback time indicated by first information, and second time, to feed back CSI at the CSI feedback time indicated by the first information, so that the CSI is fed back at a low CSI processing delay, and a network device obtains accurate CSI, to ensure high reliability of service data transmission.

To achieve the foregoing objective, the following technical solutions are used in this application.

According to a first aspect, a measurement reporting method is provided. The measurement reporting method includes: receiving first information, where the first information indicates feedback time of first CSI; and if the feedback time of the first CSI is after first time, feeding back the first CSI based on the first information, where the first time is determined based on second time and a first processing delay, or the first time is determined based on the second time and a second processing delay. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

According to the measurement reporting method in the first aspect, a terminal device determines, based on whether the preset condition is met, that a CSI processing delay is the first processing delay or the second processing delay, and after the preset condition is met and the first processing delay expires after the terminal device receives the first information, feeds back the CSI based on the feedback time, of the first CSI, indicated by the first information. In this way, the terminal device can adjust the CSI processing delay based on whether the preset condition is met, so that the CSI processing delay is reduced when the preset condition is met, and the terminal device sends timely and accurate CSI to the network device, to ensure high reliability of service data transmission.

In a possible implementation, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator (rank indication, RI), the RI indicates a target rank, and the target rank is one of the candidate ranks. When the first CSI includes a precoding matrix indicator (precoding matrix indication, PMI), the PMI indicates a target precoding matrix, and the target precoding matrix is one of the candidate precoding matrices.

In this way, if a quantity of CSI-RS resources is small, time required for CSI measurement is short. If a quantity of candidate ranks or candidate precoding matrices is small, time required for CSI measurement is short, and less data processing needs to be performed. Therefore, when the quantity of CSI-RS resources does not exceed the preset CSI-RS resource quantity threshold, the quantity of candidate ranks does not exceed the preset rank quantity threshold, or the quantity of candidate precoding matrices does not exceed the preset precoding matrix quantity threshold, the first processing delay required by the terminal device is short, so that the terminal device can send accurate CSI to the network device in a timely manner, to ensure high reliability of service transmission.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is a positive integer greater than 1, the preset rank quantity threshold is 1, the preset precoding matrix quantity threshold is N, and N is an integer greater than or equal to 1.

In a possible implementation, the preset condition is one or more of the following conditions: a quantity of CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

In a possible implementation, the method further includes: receiving indication information, where the indication information indicates at least one of a candidate rank and a candidate precoding matrix.

In a possible implementation, the indication information indicates a CSI-RS resource for the first CSI, and there is an association relationship between a quantity of ports of the CSI-RS resource and the candidate rank.

In a possible implementation, the indication information is one or more of the following: a CSI reporting configuration identifier, a CSI-RS resource identifier, and a CSI-RS resource configuration identifier that are configured for the first CSI. The method further includes: determining second CSI based on one or more of the following: the CSI reporting configuration identifier, the CSI-RS resource identifier, and the CSI-RS resource configuration identifier; and determining a rank of the second CSI as a rank of the first CSI; and/or determining a precoding matrix of the second CSI as a precoding matrix of the first CSI. In this way, the terminal device uses the rank obtained by using the second CSI as the rank of the first CSI, to reduce time required for CSI processing, shorten a CSI processing delay, and enable the terminal device to send the CSI to the network device in a timely manner. This ensures reliability of service data transmission.

In a possible implementation, the determining a rank of the second CSI as a rank of the first CSI may include: determining a rank of second CSI closest to a first moment as the rank of the first CSI. The determining a precoding matrix of the second CSI as a precoding matrix of the first CSI includes: determining a precoding matrix of the second CSI closest to the first moment as the precoding matrix of the first CSI.

In another possible implementation, the method includes: determining a rank used for downlink data channel transmission closest to a first moment as a rank of the first CSI, and/or determining a precoding matrix used for downlink data channel transmission closest to the first moment as a precoding matrix of the first CSI.

According to a second aspect, a measurement reporting method is provided. The communication method includes: sending first information, where the first information indicates feedback time of first channel state information CSI. The feedback time of the first CSI is after first time, and the first time is determined based on second time and a first processing delay or the first time is determined based on the second time and a second processing delay. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

In a possible implementation, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is an integer greater than 1, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

In a possible implementation, the method further includes: sending indication information, where the indication information indicates at least one of a candidate rank and a candidate precoding matrix.

In a possible implementation, the indication information indicates a CSI-RS resource configured for the first CSI, and there is an association relationship between a quantity of ports of the CSI-RS resource and a quantity of candidate ranks.

In a possible implementation, the indication information may be one or more of a CSI reporting configuration identifier, a CSI-RS resource identifier, and a CSI-RS resource configuration identifier that are configured for the first CSI. Second CSI may be determined based on one or more of the CSI reporting configuration identifier, the CSI-RS resource identifier, and the CSI-RS resource configuration identifier. A rank of the first CSI is a rank of the second CSI, and/or a precoding matrix of the first CSI is a precoding matrix of the second CSI.

In a possible implementation, the rank of the first CSI is a rank of second CSI closest to a first moment; and/or the precoding matrix of the first CSI is a precoding matrix of the second CSI closest to the first moment.

In another possible implementation, a rank of the first CSI is a rank used for downlink data channel transmission closest to a first moment; and/or a precoding matrix of the first CSI is a precoding matrix used for downlink data channel transmission closest to the first moment.

In addition, for technical effects of the measurement reporting method in the second aspect, refer to technical effects of the measurement reporting method in any possible implementation of the first aspect. Details are not described herein again.

According to a third aspect, a measurement reporting apparatus is provided. The measurement reporting apparatus includes a transceiver unit and a processing unit.

The transceiver unit is configured to receive first information, where the first information indicates feedback time of first CSI, and the first information is used to trigger feedback of the CSI.

The processing unit is configured to: if the feedback time of the first CSI is after first time, feed back the CSI based on the first information, where the first time is determined based on second time and a first processing delay, or the first time is determined based on the second time and a second processing delay. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

In a possible implementation, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is an integer greater than 1, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

In a possible implementation, the transceiver unit is further configured to receive indication information, where the indication information indicates at least one of a candidate rank and a candidate precoding matrix.

In a possible implementation, the indication information indicates a CSI-RS resource configured for the first CSI, and there is an association relationship between a quantity of ports of the CSI-RS resource and the candidate rank.

In a possible implementation, the indication information is one or more of the following: a CSI reporting configuration identifier, a CSI-RS resource identifier, and a CSI-RS resource configuration identifier that are configured for the first CSI.

The processing unit is further configured to determine second CSI based on one or more of the following: the CSI reporting configuration identifier, the CSI-RS resource identifier, and the CSI-RS resource configuration identifier

The processing unit is further configured to determine a rank of the second CSI as a rank of the first CSI, and/or determine a precoding matrix of the second CSI as a precoding matrix of the first CSI.

In a possible implementation, the processing unit is further configured to determine a rank of second CSI closest to a first moment as the rank of the first CSI; and/or the processing unit is further configured to determine a precoding matrix of the second CSI closest to the first moment as the precoding matrix of the first CSI.

In a possible implementation, the processing unit is further configured to determine a rank used for downlink data channel transmission closest to a first moment as a rank of the first CSI, and/or the processing unit is further configured to determine a precoding matrix used for downlink data channel transmission closest to the first moment as a precoding matrix of the first CSI.

It should be noted that the transceiver unit according to the third aspect may include a receiving unit and a sending unit. The receiving unit is configured to receive data from a network device, and the sending unit is configured to send data to the network device. A specific implementation of the transceiver unit is not specifically limited in this application.

Optionally, the measurement reporting apparatus in the third aspect may further include a storage unit, and the storage unit stores a program or instructions. When the processing unit executes the program or the instructions, the measurement reporting apparatus in the third aspect can perform the communication method according to the first aspect.

It should be noted that the measurement reporting apparatus in the third aspect may be a terminal device, or may be a component or a combined component in the terminal device, or may be a chip or a chip system disposed in the terminal device. This is not limited in this application.

In addition, for technical effects of the measurement reporting apparatus in the third aspect, refer to technical effects of the measurement reporting method in any possible implementation of the first aspect. Details are not described herein again.

According to a fourth aspect, a measurement reporting apparatus is provided. The measurement reporting apparatus includes a transceiver unit.

The transceiver unit is configured to send first information, where the first information indicates feedback time of first channel state information CSI. The feedback time of the first CSI is after first time, and the first time is determined based on second time and a first processing delay or the first time is determined based on the second time and a second processing delay. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

In a possible implementation, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is an integer greater than 1, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

In a possible implementation, the transceiver unit is configured to send indication information, where the indication information indicates at least one of a candidate rank and a candidate precoding matrix.

In a possible implementation, the indication information indicates a CSI-RS resource configured for the first CSI, and there is an association relationship between a quantity of ports of the CSI-RS resource and a quantity of candidate ranks.

In a possible implementation, the indication information is one or more of the following: a CSI reporting configuration identifier, a CSI-RS resource identifier, and a CSI-RS resource configuration identifier that are configured for the first CSI. Second CSI is determined based on one or more of the CSI reporting configuration identifier, the CSI-RS resource identifier, and the CSI-RS resource configuration identifier. A rank of the first CSI is a rank of the second CSI, and/or a precoding matrix of the first CSI is a precoding matrix of the second CSI.

In a possible implementation, the rank of the first CSI is a rank of second CSI closest to a first moment; and/or the precoding matrix of the first CSI is a precoding matrix of the second CSI closest to the first moment.

In another possible implementation, a rank of the first CSI is a rank used for downlink data channel transmission closest to a first moment; and/or a precoding matrix of the first CSI is a precoding matrix used for downlink data channel transmission closest to the first moment.

It should be noted that the measurement reporting apparatus in the fourth aspect may be a network device, or may be a component or a combined component in the network device, or may be a chip or a chip system disposed in the network device. This is not limited in this application.

In addition, for technical effects of the measurement reporting apparatus in the fourth aspect, refer to technical effects of the measurement reporting method in any possible implementation of the first aspect. Details are not described herein again.

According to a fifth aspect, a measurement reporting apparatus is provided. The measurement reporting apparatus includes a processor, the processor is coupled to a memory, and the memory is configured to store a computer program. The processor is configured to execute the computer program stored in the memory, so that the measurement reporting apparatus performs the measurement reporting method according to any one of the possible implementations of the first aspect and the second aspect.

In a possible design, the measurement reporting apparatus according to the fifth aspect may further include a transceiver. The transceiver may be a transceiver circuit or an input/output port. The transceiver may be configured for communication between the measurement reporting apparatus and another measurement reporting apparatus.

In this application, the measurement reporting apparatus in the fifth aspect may be a terminal device or a network device, or a chip or a chip system disposed in the terminal device or the network device.

In addition, for technical effects of the measurement reporting apparatus in the fifth aspect, refer to technical effects of the measurement reporting method in any implementation of the first aspect and the second aspect. Details are not described herein again.

According to a sixth aspect, a chip system is provided. The chip system includes a processor and an input/output port. The processor is configured to implement a processing function in the first aspect and the second aspect, and the input/output port is configured to implement sending and receiving functions in the first aspect and the second aspect.

In a possible design, the chip system further includes a memory. The memory is configured to store program instructions and data that implement functions in the first aspect and the second aspect.

The chip system may include a chip, or may include a chip and another discrete component.

According to a seventh aspect, a communication system is provided. The system includes a network device and a terminal device.

According to an eighth aspect, a computer-readable storage medium is provided, and the computer-readable storage medium stores computer instructions. When the computer instructions are run on a computer, the computer is enabled to perform the measurement reporting method according to any one of the possible implementations of the first aspect and the second aspect.

According to a ninth aspect, a computer program product including instructions is provided. The computer program product includes a computer program or instructions. When the computer program or the instructions are run on a computer, the computer is enabled to perform the measurement reporting method according to any one of the possible implementations of the first aspect and the second aspect.

It should be noted that various possible implementations in any one of the foregoing aspects may be combined on a premise that the solutions are not contradictory.

### BRIEF DESCRIPTION OF DRAWINGS

FIG. 1 is a schematic diagram of a structure of a measurement reporting system according to an embodiment of this application;
FIG. 2 is a schematic flowchart 1 of a measurement reporting method according to an embodiment of this application;
FIG. 3 is a schematic diagram of second time according to an embodiment of this application;
FIG. 4 is a schematic diagram of CSI feedback time and a CSI processing delay according to an embodiment of this application;
FIG. 5 is a schematic diagram of a computing processing unit occupied by CSI according to an embodiment of this application;
FIG. 6 is a schematic flowchart 2 of a measurement reporting method according to an embodiment of this application;
FIG. 7 is a schematic diagram of second CSI at different moments according to an embodiment of this application;
FIG. 8 is a schematic composition diagram 1 of a measurement reporting apparatus according to an embodiment of this application;
FIG. 9 is a schematic composition diagram 2 of a measurement reporting apparatus according to an embodiment of this application; and
FIG. 10 is a schematic diagram of a hardware structure of a measurement reporting apparatus according to an embodiment of this application.

### DESCRIPTION OF EMBODIMENTS

The following describes technical solutions of this application with reference to the accompanying drawings.

The technical solutions in embodiments of this application may be used in various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and/or a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, the word such as "example" or "for example" is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In embodiments of this application, "downlink information" may include "downlink data", the "downlink data" may be carried on a "downlink data channel" for transmission, and the "downlink information", the "downlink data", and the "downlink data channel" may be exchanged sometimes. It should be noted that, when a difference between the "downlink information", the "downlink data", and the "downlink data channel" is not emphasized, to-be-expressed meanings are consistent.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

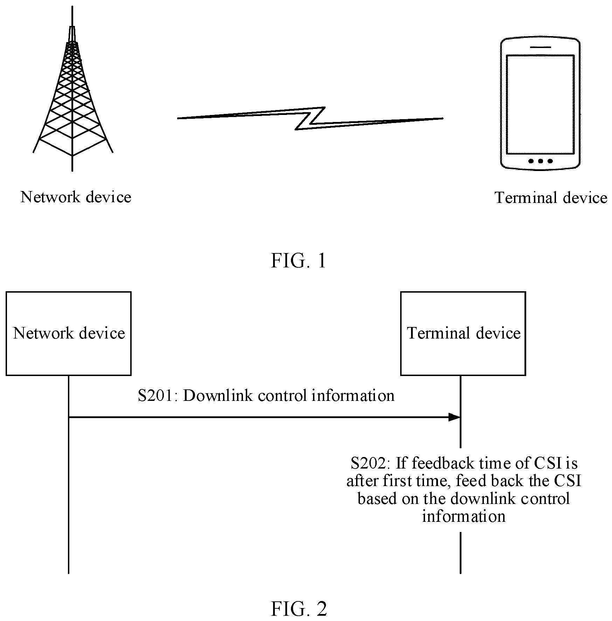

FIG. 1 is a schematic diagram of an architecture of a communication system to which a measurement reporting method is applicable according to an embodiment of this application. For ease of understanding embodiments of this application, a communication system shown in FIG. 1 is first used as an example to describe in detail a communication system applicable to embodiments of this application. It should be noted that the solutions in embodiments of this application may also be used in another mobile communication system, and a corresponding name may also be replaced with a name of a corresponding function in the another mobile communication system.

As shown in FIG. 1, the communication system includes a terminal device and a network device.

The terminal device is a terminal that accesses the communication system and that has a wireless transceiver function, or a chip or a chip system that may be disposed in the terminal. The terminal device may also be referred to as user equipment (user equipment, UE), a user apparatus, an access terminal, a subscriber unit, a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a vehicle-mounted terminal, an RSU that has a terminal function, or the like. The terminal device in embodiments of this application may be an in-vehicle module, an in-vehicle module group, an in-vehicle component, an in-vehicle chip, or an in-vehicle unit that is built in or installed in a vehicle as one or more components or units. For example, the vehicle may implement, by using the in-vehicle module, the in-vehicle module group, the in-vehicle component, the in-vehicle chip, or the in-vehicle unit that is built in or installed, the measurement reporting method provided in this application.

The network device is a device that is located on a network side of the communication system and that has a wireless transceiver function, or a chip or a chip system that can be disposed in the device. The network device includes but is not limited to an access point (access point, AP) (for example, a home gateway, a router, a server, a switch, or a bridge) in a wireless fidelity (wireless fidelity, Wi-Fi) system, a base station, an evolved NodeB (evolved NodeB, eNB), a home NodeB (for example, a home evolved NodeB or a home NodeB, HNB), a baseband unit (baseband unit, BBU), a radio relay node, a radio backhaul node, a transmission point (transmission and reception point, TRP, or transmission point, TP), or the like. Alternatively, the network device may be a gNB or a transmission point (TRP or TP) in a 5G such as new radio (new radio, NR) system, or one antenna panel or a group of antenna panels (including a plurality of antenna panels) of a base station in the 5G system, or may be a network node that forms a gNB or a transmission point, for example, a baseband unit (BBU), a central unit (central unit, CU), a distributed unit (distributed unit, DU), or a roadside unit (road side unit, RSU) having a base station function. The central unit CU may include a control plane (central unit-control plane, CU-CP) and a user plane (central unituser plane, CU-UP). Alternatively, the network device may be a device including a central unit CU and a distributed unit DU.

The network device may be configured to send a downlink control channel, and the downlink control channel may indicate the terminal device to receive a downlink shared channel, or schedule the terminal device to send an uplink shared channel. The network device may be further configured to receive an uplink shared channel, an uplink control channel, and the like that are sent by the terminal device. The network device is further configured to send a CSI-RS, and receive CSI fed back by the terminal device. Correspondingly, the terminal device may be configured to receive the downlink control channel sent by the network device, and determine a carrier for sending feedback information. Then, the terminal device sends the uplink shared channel, the uplink control channel, and the like based on the carrier for sending the feedback information and a capability of the terminal device. The terminal device may be further configured to receive a CSI-RS, determine CSI, feed back the CSI, and the like.

In some embodiments, the network device sends configuration information and a CSI-RS used for channel and interference measurement to the terminal device. Correspondingly, the terminal device receives the configuration information and the CSI-RS, and then the terminal device measures a channel and/or interference based on the received CSI-RS. Then, the terminal device feeds back channel and/or interference information obtained through measurement to the network device. Correspondingly, the network device receives and detects the channel and/or interference information fed back by the terminal device, so that the network device can send downlink data to the terminal device based on the received channel and/or interference information.

It should be noted that the measurement reporting method provided in embodiments of this application is applicable to or assist in communication between the terminal device and the network device shown in FIG. 1.

It should be understood that FIG. 1 is merely a simplified schematic diagram of an example for ease of understanding. The communication system may further include another network device and/or another terminal device that are/is not shown in FIG. 1.

For ease of understanding, the following describes configuration information of a reference signal in embodiments of this application.

For example, if the reference signal is a CSI-RS, the configuration information may include a configured information element (information element, IE), such as a CSI resource configuration (CSI-ResourceConfig) and a CSI reporting configuration (CSI-ReportConfig).

The CSI resource configuration may be used to configure information related to a CSI measurement resource. For example, the CSI resource configuration may include one or more of the following: a CSI resource configuration identifier (CSI-ResourceConfigId), resource type (ResourceType) configuration information, and CSI resource set list (CSI-RS-ResourceSetList) configuration information.

Specifically, the CSI resource configuration identifier is an identifier of the CSI resource configuration, and the CSI resource configuration identifier may be associated with a CSI reporting configuration. For example, a CSI resource configuration identifier 3 is associated with a CSI reporting configuration whose reporting configuration identifier is 1. It may be learned that configuration information whose CSI resource configuration identifier is 3 corresponds to CSI reporting configuration information whose reporting configuration identifier is 1.

The resource type (ResourceType) configuration information may include periodic, semi-persistent, and aperiodic resources. According to functions of CSI-RS resources, the CSI-RS resources may be classified into a non-zero power CSI-RS (non-zero power CSI-RS, NZP-CSI-RS) used for channel measurement, a zero power CSI-RS (zero power CSI-RS, ZP-CSI-RS) used for interference measurement, and an NZP-CSI-RS used for interference measurement. The ZP-CSI-RS may be referred to as channel state information interference measurement CSI-IM (channel state information interference measurement). For a ZP-CSI-RS resource, the network device does not send any information on the ZP-CSI-RS resource, and the terminal device performs detection on the resource, and detected information is interference. For an NZP-CSI-RS resource, the network device sends a known sequence on the resource, and the terminal device may obtain CSI and/or interference by using the known sequence.

The CSI resource set list configuration information may be used to configure a list of resource sets, and the configured resource sets may include an NZP-CSI-RS resource set and/or a CSI-IM resource set. A resource set configuration may be associated with a resource set identifier. For example, configuration information of the NZP-CSI-RS resource set (NZP-CSI-RS-ResourceSet) may be associated with an NZP-CSI-RS resource set identifier (NZP-CSI-RS-ResourceSetId), and configuration information of the CSI-IM resource set (CSI-IM-ResourceSet) may be associated with a CSI-IM resource set identifier (CSI-IM-ResourceSetId).

For example, the configuration information of the NZP-CSI-RS resource set may be used to configure a set of resources for channel measurement, and the set of resources may include at least one NZP-CSI-RS resource. A resource configuration may be associated with a resource identifier. For example, NZP-CSI-RS resource (NZP-CSI-RS-Resources) configuration information may be associated with an NZP-CSI-RS resource identifier (NZP-CSI-RS-ResourceId). The NZP-CSI-RS resource configuration information may be used to configure information related to an NZP-CSI-RS resource. For example, the terminal device may measure channel information based on the NZP-CSI-RS resource, and feed back CSI. When one NZP-CSI-RS resource set includes a plurality of NZP-CSI-RS resources, the terminal device may specifically feed back a specific NZP-CSI-RS resource on which the CSI is obtained by measurement, which may be indicated by a CSI-RS resource indicator (CSI-RS resource indicator, CRI) fed back by the terminal device. For example, if CRI=0, it may indicate that the CSI fed back by the terminal device is channel information obtained through measurement on a resource whose resource ID is 0.

For example, the configuration information of the CSI-IM resource set may be used to configure a set of resources for interference measurement, and is similar to the configuration information of the NZP-CSI-RS resource set. Details are not described in embodiments of this application. CSI-IM resource configuration information may be used to configure information related to a CSI-IM resource, and the CSI-IM resource configuration information may be associated with a CSI-IM resource identifier.

The CSI reporting configuration may be used to configure a parameter related to CSI reporting, for example, a type of reported CSI and a reported measurement indicator. For example, the CSI reporting configuration may include but is not limited to one or more of the following: a reporting configuration identifier (ReportConfigId), channel measurement resource (ResourcesForChannel Measurement) configuration information, interference measurement CSI-IM resource (CSI-IM-RessourcesForInterference) configuration information, interference measurement NZP-CSI-RS resource (NZP-CSI-RS-ResourcesForInterference) configuration information, a reporting configuration type (ReportConfigType), a reporting quantity (reportQuantity), a codebook type (codebookConfig), and broadband feedback or narrowband feedback. For specific descriptions of the broadband feedback and the narrowband feedback, refer to the following embodiments. Details are not described herein.

Specifically, the reporting configuration identifier is a CSI reporting configuration identifier. The channel measurement resource configuration information may be used to configure a CSI-RS resource for channel measurement, and may be associated with a CSI resource configuration by using a CSI resource configuration identifier (CSI-ResourceConfigId). The interference measurement CSI-IM resource configuration information may be used to configure a CSI-RS resource for interference measurement, and may be associated with a CSI resource configuration by using a CSI resource configuration identifier (CSI-ResourceConfigId). The interference measurement NZP-CSI-RS resource configuration information may be used to configure an NZP-CSI-RS resource for interference measurement, and may be associated with a CSI resource configuration by using a CSI resource configuration identifier (CSI-ResourceConfigId).

The reporting configuration type may indicate a CSI sending manner, and may include P-CSI, SP-CSI, and A-CSI. The P-CSI may be configured by the network device for the terminal device by using a radio resource control (radio resource control, RRC) message, and does not need to be triggered by the network device. The SP-CSI may be triggered by the network device by using a media access control control element (medium access control control element, MAC CE) or downlink control information (downlink control information, DCI). After the SP-CSI is triggered, the terminal device periodically sends CSI. In the SP-CSI triggered by using the MAC CE, CSI is sent on a physical uplink control channel (physical uplink control channel, PUCCH), and in the SP-CSI triggered by using the DCI, CSI is sent on a physical uplink shared channel (physical uplink shared channel, PUSCH). The A-CSI is triggered by the network device by using DCI, and is reported only once on a specified PUSCH in a specified slot after being triggered.

The report quantity may include a CRI, a rank indicator (rank indicator, RI), a precoding matrix indicator (precoding matrix indicator, PMI), a channel quality indicator (channel quantity indicator, CQI), and/or the like. The network device may send different configuration information to the terminal device, so that the terminal device reports all or some of the configuration information. The broadband feedback may indicate that only one value is fed back in an entire reporting bandwidth. The narrowband feedback may indicate that feedback is performed in each subband.

The codebook type is a type of a codebook used when a PMI is reported. In the conventional technology, the terminal device may report a PMI by using a codebook. For example, if a precoding matrix obtained by the terminal device through measurement is A, the terminal device reports a codebook corresponding to A. That is, the terminal device reports A. In other words, the codebook is used to quantize the precoding matrix. In the conventional technology, a plurality of types of codebooks may be used to report a PMI. The plurality of types of codebooks include, for example, a type 1 (type 1) codebook and a type 2 (type 2) codebook. Each type of codebook may be further classified into a finer type. For example, typeI-SinglePanel is a codebook type in the type 1 codebook. For more detailed descriptions of the codebook type, refer to section 5.2.2.2 of the 3rd Generation Partnership Project (3rd generation partnership project, 3GPP) technical specification (technical specification, TS) 38.214 V16.1.0.

FIG. 2 is a schematic flowchart 1 of a measurement reporting method according to an embodiment of this application. The measurement reporting method is applicable to communication between the terminal device and the network device shown in FIG. 1.

As shown in FIG. 2, the measurement reporting method includes the following steps.

S201: The network device sends first information to the terminal device. Correspondingly, the terminal device receives the first information sent by the network device.

The first information indicates feedback time of first CSI. The first CSI may be CSI obtained through first CSI measurement, and the first CSI measurement may be current CSI measurement. Alternatively, the first CSI is CSI obtained through CSI measurement at any moment. In the following, an example in which the first CSI is CSI obtained through the first CSI measurement is used to describe the technical solutions of this application.

Optionally, the first information may be downlink control information DCI, and the downlink control information may be further used to trigger feedback of the first CSI. A-CSI is used as an example. The DCI is used to trigger A-CSI measurement, and feedback time of CSI obtained through the A-CSI measurement is also indicated by the DCI.

Optionally, the first information may be higher layer signaling. P-CSI is used as an example. The higher layer signaling is used to configure feedback time of P-CSI/SP-CSI, or is used to configure a periodicity for reporting the P-CSI/SP-CSI by the terminal device, or is used to configure a time-frequency resource for reporting the P-CSI/SP-CSI by the terminal device.

Optionally, the first information indicates the terminal device to feed back the first CSI to the network device at feedback time, of the first CSI, indicated by the terminal device.

Optionally, the feedback time of the first CSI may be a period of time, that is, a time period, and indicates that the terminal device may feed back the first CSI in the time period.

Optionally, the feedback time of the first CSI may alternatively be a first symbol of a time-frequency resource on which the terminal device feeds back the first CSI, or a moment at which the first symbol of the time-frequency resource on which the terminal device feeds back the first CSI is located. For example, the symbol is an OFDM symbol.

S202: If the feedback time of the first CSI is after first time, the terminal device feeds back the first CSI based on the first information.

The first time is determined based on second time and a first processing delay. Alternatively, the first time is determined based on the second time and a second processing delay.

Optionally, the second time is time at which the first CSI measurement starts, or the second time is a last symbol of the first information received by the terminal device, or the second time is a moment at which a first symbol of a CSI measurement resource used for the first CSI is located, or the second time may be a start moment of a computing processing unit occupied by the first CSI, or the second time is a moment at which a last symbol of the CSI measurement resource used for the first CSI is located, or the second time is an end moment of the last symbol of the CSI measurement resource used for the first CSI, or the second time is a start moment of the first symbol of the CSI measurement resource used for the first CSI, or the second time is an end moment of the last symbol of the first information received by the terminal device. The first information indicates the feedback time of first CSI. For a specific description of the computing processing unit occupied by the first CSI, refer to the following content. Details are not described herein. For a description of the first CSI measurement, refer to the foregoing content. Details are not described herein again.

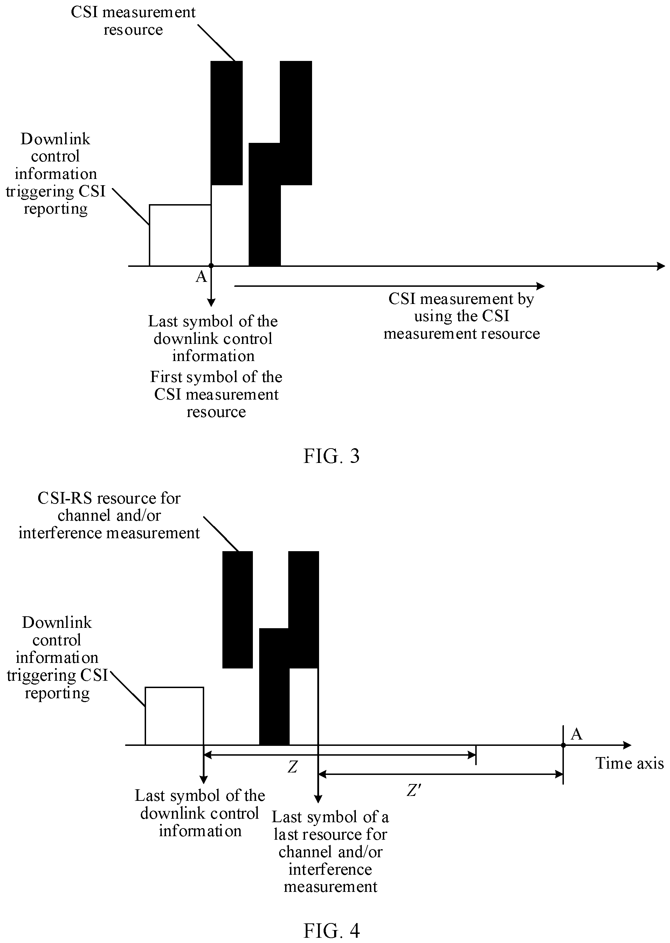

For example, as shown in FIG. 3, the first information is downlink control information, and the downlink control information is used to trigger feedback of the first CSI (that is, reporting of the first CSI). A point A represents the second time. The second time is a moment corresponding to an end location of a last symbol of the downlink control information that triggers reporting of the first CSI, or the second time is a moment corresponding to a first symbol after the last symbol of the downlink control information that triggers reporting of the first CSI, or the second time is a moment corresponding to a start location of a first symbol of a CSI-RS resource used for channel and/or interference measurement. After a moment corresponding to the point A, the terminal device starts the first CSI measurement. In other words, the second time is a moment at which the first CSI measurement starts, or the second time is the start moment of the computing processing unit occupied by the first CSI.

Optionally, the first processing delay is a CSI processing delay determined when a preset condition is met, the second processing delay is a CSI processing delay determined when the preset condition is not met, and the second processing delay is longer than the first processing delay.

Optionally, the first processing delay and the second processing delay each may be represented by a quantity of symbols. In other words, the first processing delay and the second processing delay each correspond to the quantity of symbols. A larger quantity of symbols corresponding to the first processing delay or the second processing delay indicates a longer first processing delay or second processing delay. The second processing delay is longer than the first processing delay. In other words, a quantity of symbols corresponding to the second processing delay is greater than a quantity of symbols corresponding to the first processing delay.

Optionally, if the feedback time, of the first CSI, indicated by the first information received by the terminal device is after the first time, the terminal device feeds back the first CSI based on the first information. Optionally, the first CSI is valid CSI.

Optionally, if the feedback time, of the first CSI, indicated by the first information received by the terminal device is before the first time, the terminal device ignores the first information, or the terminal device does not update the first CSI, or the terminal device does not feed back the first CSI.

Optionally, the second time is determined based on the time at which the first CSI measurement starts, and/or the end moment of the last symbol of the first information received by the terminal device, and/or the start moment of the first symbol of the CSI measurement resource used for the first CSI, and/or the start moment of the computing processing unit occupied by the first CSI, and/or an end moment of a last symbol of resources used for the first CSI measurement.

FIG. 4 is a schematic diagram of CSI feedback time and a CSI processing delay according to an embodiment of this application.

For example, the CSI feedback time needs to meet requirements of *Z* and *Z'*, that is, the CSI feedback time needs to be after *Z* and *Z'*. As shown in FIG. 4, a start location of *Z* is the last symbol of the first information used to trigger reporting of the first CSI, a start location of *Z'* is a last symbol of a last resource used for channel and/or interference measurement, and the feedback time of the first CSI needs to be after a point A on a time axis shown in FIG. 4. Optionally, *Z* and *Z'* are used to describe a CSI processing delay. In this example, the CSI processing delay is a processing delay of the first CSI.

Optionally, the first time may be a moment after the first processing delay since the terminal device receives the last symbol of the first information, or the first time may be a moment after the second processing delay since the terminal device receives the last symbol of the first information.

For example, the moment at which the terminal device receives the last symbol of the first information is 11, the quantity of symbols corresponding to the first processing delay is m, and the quantity of symbols corresponding to the second processing delay is n. Duration for transmitting the m symbols between the terminal device and the network device is t2, and duration for transmitting the n symbols between the terminal device and the network device is t3. Therefore, the terminal device may determine a moment corresponding to t1+t2 as the first time T1, or determine a moment corresponding to t1+t3 as the first time T2.

The terminal device needs to receive the first information, and feed back the first CSI to the network device after a corresponding CSI processing delay. Therefore, optionally, if the feedback time, of the first CSI, indicated by the first information received by the terminal device is after the first time, the terminal device feeds back the first CSI based on the feedback time, of the first CSI, indicated by the received first information. Optionally, if the feedback time, of the first CSI, indicated by the first information received by the terminal device is before the first time, the terminal device does not respond, that is, the terminal device ignores the first information, or the terminal device does not feed back the first CSI based on the feedback time, of the first CSI, indicated by the first information, or the terminal device does not update the first CSI.

Optionally, when the preset condition is met, the CSI processing delay is the first processing delay. In this case, the terminal device determines the first time based on the first processing delay and the second time, and determines, based on the first time and the feedback time, of the first CSI, indicated by the first information received by the terminal device, whether to feed back the first CSI based on the first information. When the preset condition is not met, the terminal device determines the first time based on the second processing delay and the second time, and then determines, based on the first time and the feedback time, of the first CSI, indicated by the first information received by the terminal device, whether to feed back the first CSI based on the first information.

Optionally, when determining the first time, the terminal device further needs to consider a timing advance (timing advance). The timing advance is used to reduce a time synchronization error between different terminal devices and the network device, so that an error in time at which uplink data sent by the different terminal devices arrives at the network device is small.

The terminal device may determine the CSI processing delay as the first processing delay when the first CSI meets the preset condition, and determine the CSI processing delay as the second processing delay when the first CSI does not meet the preset condition. The first processing delay is shorter than the second processing delay. In this way, the terminal device can adjust the CSI processing delay based on whether the preset condition is met, so that the CSI processing delay is reduced when the preset condition is met, and the terminal device sends timely and accurate CSI to the network device, to ensure high reliability of service data transmission.

The following describes different cases of the preset condition used to determine whether the CSI processing delay of the terminal device is the first processing delay or the second processing delay.

### Case 1:

Optionally, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks does not exceed a preset rank quantity threshold, and a quantity of candidate precoding matrices does not exceed a preset precoding matrix quantity threshold. For example, the preset CSI-RS resource quantity threshold, the preset port quantity threshold, the preset rank quantity threshold, and the preset precoding matrix quantity threshold may be specified in a protocol, or may be determined by the network device and notified to the terminal device.

Optionally, the preset CSI-RS resource quantity threshold is 1, the preset port quantity threshold is M, M is a positive integer, the preset rank quantity threshold is 1, and the preset precoding matrix quantity threshold is 1. The preset port quantity threshold M is preset. For example, M is a positive integer greater than or equal to 2, or M=4.

The CSI-RS resource quantity is a quantity of CSI-RS resources associated with the first CSI. Optionally, the first CSI is determined by using a reference signal sent on a CSI-RS resource. For example, the reference signal is a CSI-RS.

It should be noted that a quantity of candidate ranks is different from a value of a candidate rank. For example, the quantity of candidate ranks is 2, and the two candidate ranks may be numbered rank1 and rank2. A value of rank1 may be 3, and a value of rank2 may be 1. In addition, the network device configures a port of a CSI-RS resource while configuring the CSI-RS resource. Therefore, there is a correspondence between the CSI-RS resource and the quantity of ports of the CSI-RS resource.

For example, a manner of determining whether the preset condition is met is as follows:

When the preset condition includes one item, if the first CSI meets the item, it is determined that the first CSI meets the preset condition, and if the first CSI does not meet the item, it is determined that the first CSI does not meet the preset condition.

When the preset condition includes a plurality of items, a manner of determining that the first CSI meets the preset condition may include: In a first manner, if the first CSI meets any item of the preset condition, it may be determined that the first CSI meets the preset condition; if the first CSI meets no item of the preset condition, it is determined that the first CSI does not meet the preset condition. Alternatively, in a second manner, if the first CSI meets all items of the preset condition, it is determined that the first CSI meets the preset condition; if the first CSI does not meet any item of the preset condition, it is determined that the first CSI does not meet the preset condition.

The following provides description by using an example in which the preset condition includes one item.

For example, the preset condition includes: the quantity of CSI-RS resources does not exceed the preset CSI-RS resource quantity threshold. Assuming that the quantity of CSI-RS resources corresponding to the first CSI is 1, and the preset CSI-RS resource quantity threshold is 1, the quantity of CSI-RS resources does not exceed the preset CSI-RS resource quantity threshold, the first CSI meets the preset condition, and the processing delay of the first CSI is the first processing delay.

For example, the preset condition includes: the quantity of ports of the CSI-RS resource does not exceed the preset port quantity threshold. Assuming that the quantity of CSI-RS resources corresponding to the first CSI is 1, the quantity of ports of the CSI resource is 2, and the preset port quantity threshold is 4, the quantity of ports of the CSI-RS resource does not exceed the preset port quantity threshold, the first CSI meets the preset condition, and the processing delay of the first CSI is the first processing delay.

For example, the preset condition includes: the quantity of candidate ranks does not exceed the preset rank quantity threshold. Assuming that the quantity of candidate ranks corresponding to the first CSI is 1, and the preset rank quantity threshold is 1, the quantity of candidate ranks does not exceed the preset rank quantity threshold, the first CSI meets the preset condition, and the processing delay of the first CSI is the first processing delay.

For example, the preset condition includes: the quantity of candidate precoding matrices does not exceed the preset precoding matrix quantity threshold. Assuming that the quantity of candidate precoding matrices corresponding to the first CSI is 1, and the preset precoding matrix quantity threshold is 1, the quantity of candidate precoding matrices does not exceed the preset precoding matrix quantity threshold, the first CSI meets the preset condition, and the processing delay of the first CSI is the first processing delay.

The following provides description by using an example in which the preset condition includes a plurality of items.

For example, the first condition includes three of the foregoing items. It is assumed that the preset condition includes: the quantity of CSI-RS resources does not exceed the preset CSI-RS resource quantity threshold, the quantity of candidate ranks does not exceed the preset rank quantity threshold, and the quantity of candidate precoding matrices does not exceed the preset precoding matrix quantity threshold.

When the preset condition includes a plurality items of the foregoing items, an example of determining, in the first manner, whether the first CSI meets the preset condition is as follows:

For example, the preset CSI-RS resource quantity threshold is 1, the preset rank quantity threshold is 1, and the preset precoding matrix quantity threshold is 1. Assuming that the quantity of CSI-RS resources corresponding to the first CSI is 1, the quantity of candidate ranks is 2, and the quantity of candidate precoding matrices is 2, the first CSI meets the preset condition. In this case, the processing delay of the first CSI is the first processing delay.

For example, the preset CSI-RS resource quantity threshold is 1, the preset rank quantity threshold is 1, and the preset precoding matrix quantity threshold is 1. Assuming that the quantity of CSI-RS resources corresponding to the first CSI is 2, the quantity of candidate ranks is 2, and the quantity of candidate precoding matrices is 2, the first CSI does not meet the preset condition. In this case, the processing delay of the first CSI is the second processing delay.

It should be noted that, if the first CSI meets one condition included in the preset condition, whether another condition included in the preset condition is met may not be determined. For example, if it is determined that the quantity of CSI-RS resources corresponding to the first CSI does not exceed the preset CSI-RS resource quantity threshold, whether the quantity of candidate ranks of the first CSI exceeds the preset rank quantity threshold may no longer be determined, to reduce a CSI processing procedure and reduce a CSI processing delay.

When the preset condition includes a plurality items of the foregoing items, an example of determining, in the second manner, whether the first CSI meets the preset condition is as follows:

For example, the preset CSI-RS resource quantity threshold is 1, the preset rank quantity threshold is 1, and the preset precoding matrix quantity threshold is 1. Assuming that the quantity of CSI-RS resources corresponding to the first CSI is 1 and does not exceed the preset CSI-RS resource quantity threshold, the quantity of candidate ranks is 1 and does not exceed the preset rank quantity threshold, and the quantity of candidate precoding matrices is 1 and does not exceed the preset precoding matrix quantity threshold, the first CSI meets the preset condition. In this case, the processing delay of the first CSI is the first processing delay.

For example, the preset CSI-RS resource quantity threshold is 1, the preset rank quantity threshold is 1, and the preset precoding matrix quantity threshold is 1. Assuming that the quantity of CSI-RS resources corresponding to the first CSI is 2 and exceeds the preset CSI-RS resource quantity threshold, the quantity of candidate ranks is 1, and the quantity of candidate precoding matrices is 1, the first CSI does not meet the preset condition. In this case, the processing delay of the first CSI is the second processing delay.

Optionally, when it is determined that the first CSI does not meet any item included in the preset condition, whether another item included in the preset condition is met may not be determined. For example, if it is determined that the quantity of CSI-RS resources corresponding to the first CSI exceeds the preset CSI-RS resource quantity threshold, whether the quantity of candidate ranks of the first CSI exceeds the preset rank quantity threshold may no longer be determined, to reduce a CSI processing procedure and reduce a CSI processing delay.

The foregoing is merely an example provided in this embodiment of this application, and examples in which the first CSI meets or does not meet the preset condition are not listed one by one in this application.

Optionally, when the terminal device reports the first CSI, the first CSI does not include a CRI, an RI, or a PMI. In other words, when reporting the first CSI, the terminal device does not report the CRI, the RI, or the PMI.

Optionally, when the terminal device reports the first CSI, the first CSI includes only a CQI. In other words, when reporting the first CSI, the terminal reports only the CQI.

Optionally, when the terminal device reports the first CSI, the first CSI does not include an RI and/or a PMI. In other words, when reporting the first CSI, the terminal device does not report the RI and/or the PMI.

Optionally, when the terminal device reports the first CSI, the first CSI does not include a CRI or an RI. In other words, when reporting the first CSI, the terminal device does not report the CRI or the RI.

Optionally, the terminal device does not measure the RI and/or the PMI when measuring the first CSI.

It should be noted that when reporting the first CSI, the terminal device reports an item included in the first CSI, and does not report an item that is not included in the first CSI. Details are not described below again.

### Case 2:

Optionally, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks does not exceed a preset rank quantity threshold, and a quantity of candidate precoding matrices does not exceed a preset precoding matrix quantity threshold. For example, the preset CSI-RS resource quantity threshold, the preset port quantity threshold, the preset rank quantity threshold, and the preset precoding matrix quantity threshold may be specified in a protocol, or may be determined by the network device and notified to the terminal device.

The preset CSI-RS resource quantity threshold is 1, the preset port quantity threshold is M, M is a positive integer, the preset rank quantity threshold is 1, the preset precoding matrix quantity threshold is N, and N is a positive integer greater than 1.

For example, for a manner of determining whether the preset condition is met, refer to the description in Case 1. Details are not described herein again.

The following provides description by using an example in which the preset condition includes one item.

For example, the preset condition includes: the quantity of CSI-RS resources does not exceed the preset CSI-RS resource quantity threshold. Assuming that the quantity of CSI-RS resources corresponding to the first CSI is 1, and the preset CSI-RS resource quantity threshold is 1, the quantity of CSI-RS resources does not exceed the preset CSI-RS resource quantity threshold, the first CSI meets the preset condition, and the processing delay of the first CSI is the first processing delay.

For example, the preset condition includes: the quantity of ports of the CSI-RS resource does not exceed the preset port quantity threshold. Assuming that the quantity of CSI-RS resources corresponding to the first CSI is 1, the quantity of ports of the CSI resource is 2, and the preset port quantity threshold is 4, the quantity of ports of the CSI-RS resource does not exceed the preset port quantity threshold, the first CSI meets the preset condition, and the processing delay of the first CSI is the first processing delay.

For example, the preset condition includes: the quantity of candidate ranks does not exceed the preset rank quantity threshold. Assuming that the quantity of candidate ranks corresponding to the first CSI is 1, and the preset rank quantity threshold is 1, the quantity of candidate ranks does not exceed the preset rank quantity threshold, the first CSI meets the preset condition, and the processing delay of the first CSI is the first processing delay.

For example, the preset condition includes: the quantity of candidate precoding matrices does not exceed the preset precoding matrix quantity threshold. Assuming that the quantity of candidate precoding matrices corresponding to the first CSI is 2, and the preset precoding matrix quantity threshold is 2, the quantity of candidate precoding matrices does not exceed the preset precoding matrix quantity threshold, the first CSI meets the preset condition, and the processing delay of the current CSI is the first processing delay.

The following provides description by using an example in which the preset condition includes a plurality of items.

For example, the first condition includes three of the foregoing items. It is assumed that the preset condition includes: the quantity of CSI-RS resources does not exceed the preset CSI-RS resource quantity threshold, the quantity of candidate ranks does not exceed the preset rank quantity threshold, and the quantity of candidate precoding matrices does not exceed the preset precoding matrix quantity threshold.

When the preset condition includes a plurality items of the foregoing items, an example of determining, in the first manner, whether the first CSI meets the preset condition is as follows:

For example, the preset CSI-RS resource quantity threshold is 1, the preset rank quantity threshold is 1, and the preset precoding matrix quantity threshold is 2. Assuming that the quantity of CSI-RS resources corresponding to the first CSI is 1, the quantity of candidate ranks is 2, and the quantity of candidate precoding matrices is 3, the first CSI meets the preset condition. In this case, the processing delay of the current CSI is the first processing delay.

For example, the preset CSI-RS resource quantity threshold is 1, the preset rank quantity threshold is 1, and the preset precoding matrix quantity threshold is 2. Assuming that the quantity of CSI-RS resources corresponding to the first CSI is 2, the quantity of candidate ranks is 2, and the quantity of candidate precoding matrices is 3, the first CSI does not meet the preset condition. In this case, the processing delay of the current CSI is the second processing delay.

It should be noted that, if the first CSI meets one condition included in the preset condition, whether another condition included in the preset condition is met may not be determined. For example, if it is determined that the quantity of CSI-RS resources corresponding to the first CSI does not exceed the preset CSI-RS resource quantity threshold, whether the quantity of candidate ranks of the first CSI exceeds the preset rank quantity threshold may no longer be determined, to reduce a CSI processing procedure and reduce a CSI processing delay.

When the preset condition includes a plurality items of the foregoing items, an example of determining, in the second manner, whether the first CSI meets the preset condition is as follows:

For example, the preset CSI-RS resource quantity threshold is 1, the preset rank quantity threshold is 1, and the preset precoding matrix quantity threshold is 2. Assuming that the quantity of CSI-RS resources corresponding to the first CSI is 1 and does not exceed the preset CSI-RS resource quantity threshold, the quantity of candidate ranks is 1 and does not exceed the preset rank quantity threshold, and the quantity of candidate precoding matrices is 2 and does not exceed the preset precoding matrix quantity threshold, the first CSI meets the preset condition. In this case, the processing delay of the current CSI is the first processing delay.

For example, the preset CSI-RS resource quantity threshold is 1, the preset rank quantity threshold is 1, and the preset precoding matrix quantity threshold is 2. Assuming that the quantity of CSI-RS resources corresponding to the first CSI is 2 and exceeds the preset CSI-RS resource quantity threshold, the quantity of candidate ranks is 1, and the quantity of candidate precoding matrices is 2, the first CSI does not meet the preset condition. In this case, the processing delay of the current CSI is the second processing delay.

Optionally, when it is determined that the first CSI does not meet any item included in the preset condition, whether another item included in the preset condition is met may not be determined. For example, if it is determined that the quantity of CSI-RS resources corresponding to the first CSI exceeds the preset CSI-RS resource quantity threshold, whether the quantity of candidate ranks of the first CSI exceeds the preset rank quantity threshold may no longer be determined, to reduce a CSI processing procedure and reduce a CSI processing delay.

The foregoing is merely an example provided in this embodiment of this application, and examples in which the first CSI meets or does not meet the preset condition are not listed one by one in this application.

Optionally, when the terminal device reports the first CSI, the first CSI does not include a CRI or an RI.

Optionally, when the terminal device reports the first CSI, the first CSI includes only a PMI and/or a CQI.

Optionally, when the terminal device reports the first CSI, the first CSI does not include an RI. In other words, when reporting the first CSI, the terminal device does not report the RI.

Optionally, when the terminal device reports the first CSI, the first CSI includes only a CRI and/or a PMI and/or a CQI. In other words, when reporting the first CSI, the terminal device reports only the CRI and/or the PMI and/or the CQI.

### Case 3:

Optionally, the preset condition is one or more of the following conditions: a quantity of CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. For example, the preset CSI-RS resource quantity threshold, the preset rank quantity threshold, and the preset precoding matrix quantity threshold may be specified in a protocol, or may be determined by the network device and notified to the terminal device.

The preset CSI-RS resource quantity threshold is I, I is a positive integer greater than 1, the preset rank quantity threshold is 1, and the preset precoding matrix quantity threshold is 1.

It should be noted that, when the quantity of candidate ranks corresponding to the at least one CSI-RS resource does not exceed the preset rank quantity threshold, the quantity of candidate ranks is not a total quantity of all candidate ranks, but is a quantity of candidate ranks corresponding to each CSI-RS resource. In addition, when the quantity of candidate precoding matrices corresponding to the at least one CSI-RS resource does not exceed the preset precoding matrix quantity threshold, the quantity of candidate precoding matrices is not a total quantity of all candidate precoding matrices, but is a quantity of candidate precoding matrices corresponding to each CSI-RS resource.

Optionally, when the quantity of candidate ranks corresponding to the at least one CSI-RS resource does not exceed a preset rank quantity threshold, the quantity of candidate ranks is a total quantity of all candidate ranks. In addition, when the quantity of candidate precoding matrices corresponding to the at least one CSI-RS resource does not exceed the preset precoding matrix quantity threshold, the quantity of candidate precoding matrices is a total quantity of all candidate precoding matrices.

In this embodiment of this application, the technical solutions of this application are described by using an example in which the quantity of candidate ranks is the quantity of candidate ranks corresponding to each CSI-RS resource, and the quantity of candidate precoding matrices is the quantity of candidate precoding matrices corresponding to each CSI-RS resource.

For example, the quantity of CSI-RS resources of the first CSI is 2, which are a CSI-RS resource 1 and a CSI-RS resource 2, a quantity of candidate ranks corresponding to the CSI-RS resource 1 is 2, and a quantity of candidate ranks corresponding to the CSI-RS resource 2 is 3. A total quantity of all candidate ranks is 5, and quantities of candidate ranks corresponding to the CSI-RS resources are 2 and 3. Likewise, if a quantity of candidate precoding matrices corresponding to the CSI-RS resource 1 is 3, and a quantity of candidate precoding matrices corresponding to the CSI-RS resource 2 is 3, a total quantity of all candidate precoding matrices is 6, and a quantity of candidate precoding matrices corresponding to a CSI-RS resource is 3.

Optionally, candidate precoding matrices corresponding to different CSI-RS resources may be the same or may be different.

For example, the quantity of CSI-RS resources of the first CSI is 2, which are a CSI-RS resource 1 and a CSI-RS resource 2, a quantity of candidate precoding matrices corresponding to the CSI-RS resource 1 is 1, and a quantity of candidate precoding matrices corresponding to the CSI-RS resource 2 is 1. A candidate precoding matrix corresponding to the CSI-RS resource 1 is P1, and a candidate precoding matrix corresponding to the CSI-RS resource 2 is P2. P1 and P2 may be the same or different.

Optionally, if the preset precoding matrix quantity threshold is 1, that the quantity of candidate precoding matrices corresponding to the at least one CSI-RS resource does not exceed the preset precoding matrix quantity threshold includes: each CSI-RS resource corresponds to only one candidate precoding matrix.

Optionally, that the quantity of candidate ranks corresponding to the at least one CSI-RS resource does not exceed the preset rank quantity threshold may include: quantities of candidate ranks corresponding to at least two CSI-RS resources may be the same.

Optionally, if the preset rank quantity threshold is 1, that the quantity of candidate ranks corresponding to the at least one CSI-RS resource does not exceed the preset rank quantity threshold includes: each CSI-RS resource corresponds to only one candidate rank.

For example, for a manner of determining whether the preset condition is met, refer to the description in Case 1. Details are not described herein again.

The following provides description by using an example in which the preset condition includes one item.

For example, the preset condition includes: the quantity of CSI-RS resources does not exceed the preset CSI-RS resource quantity threshold. Assuming that the quantity of CSI-RS resources corresponding to the first CSI is 2, and the preset CSI-RS resource quantity threshold is 2, the quantity of CSI-RS resources does not exceed the preset CSI-RS resource quantity threshold, the first CSI meets the preset condition, and the processing delay of the current CSI is the first processing delay.

For example, the preset condition includes: the quantity of candidate ranks corresponding to the at least one CSI-RS resource does not exceed the preset rank quantity threshold. The preset rank quantity threshold is 1. Assuming that the quantity of CSI-RS resources corresponding to the first CSI is 2, the two CSI-RS resources are a CSI-RS resource 1 and a CSI-RS resource 2, and a quantity of candidate ranks corresponding to the CSI-RS resource 1 or the CSI-RS resource 2 is 1, the quantity of candidate ranks corresponding to the at least one CSI-RS resource does not exceed the preset rank quantity threshold, the first CSI meets the preset condition, and the processing delay of the current CSI is the first processing delay.

For example, the preset condition includes: the quantity of candidate precoding matrices corresponding to the at least one CSI-RS resource does not exceed the preset precoding matrix quantity threshold. The preset precoding matrix quantity threshold is 1. Assuming that the quantity of CSI-RS resources corresponding to the first CSI is 2, the two CSI-RS resources are a CSI-RS resource 1 and a CSI-RS resource 2, and a quantity of candidate precoding matrices corresponding to the CSI-RS resource 1 or the CSI-RS resource 2 is 1, the quantity of candidate precoding matrices corresponding to the at least one CSI-RS resource does not exceed the preset precoding matrix quantity threshold, the first CSI meets the preset condition, and the processing delay of the current CSI is the first processing delay.

The following provides description by using an example in which the preset condition includes a plurality of items.

For example, the first condition includes two of the foregoing items. It is assumed that the preset condition includes: the quantity of CSI-RS resources does not exceed the preset CSI-RS resource quantity threshold, and the quantity of candidate ranks corresponding to at least one CSI-RS resource does not exceed the preset rank quantity threshold.

When the preset condition includes a plurality items of the foregoing items, an example of determining, in the first manner, whether the first CSI meets the preset condition is as follows:

For example, the preset CSI-RS resource quantity threshold is 2, and the preset rank quantity threshold is 1. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate ranks corresponding to the CSI-RS resource 1 is 2, and a quantity of candidate ranks corresponding to the CSI-RS resource 2 is 2, quantities of candidate ranks corresponding to all the CSI-RS resources exceed the preset rank quantity threshold. In this case, the first CSI meets the preset condition, and the processing delay of the current CSI is the first processing delay.

For example, the preset CSI-RS resource quantity threshold is 2, and the preset rank quantity threshold is 1. Assuming that the quantity of CSI-RS resources corresponding to the first CSI is 3 and exceeds the preset CSI-RS resource quantity threshold, the three CSI-RS resources are a CSI-RS resource 1, a CSI-RS resource 2, and a CSI-RS resource 3, a quantity of candidate ranks corresponding to the CSI-RS resource 1 is 2, a quantity of candidate ranks corresponding to the CSI-RS resource 2 is 3, and a quantity of candidate ranks corresponding to the CSI-RS resource 3 is 3, quantities of candidate ranks corresponding to all the CSI-RS resources exceed the preset rank quantity threshold. In this case, the first CSI does not meet the preset condition, and the processing delay of the current CSI is the second processing delay.

It should be noted that, if the first CSI meets one condition included in the preset condition, whether another condition included in the preset condition is met may not be determined. For example, if it is determined that the quantity of CSI-RS resources corresponding to the first CSI does not exceed the preset CSI-RS resource quantity threshold, whether the quantity of candidate ranks corresponding to at least one CSI-RS resource of the first CSI does not exceed the preset rank quantity threshold may no longer be determined, to reduce a CSI processing procedure and reduce a CSI processing delay.

When the preset condition includes a plurality items of the foregoing items, an example of determining, in the second manner, whether the first CSI meets the preset condition is as follows:

For example, the preset CSI-RS resource quantity threshold is 2, and the preset rank quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate ranks corresponding to the CSI-RS resource 1 is 1 and does not exceed the preset rank quantity threshold, a quantity of candidate ranks corresponding to the CSI-RS resource 2 is 3, and a quantity of candidate ranks corresponding to at least one CSI-RS resource does not exceed the preset rank quantity threshold, the first CSI meets the preset condition. In this case, the processing delay of the current CSI is the first processing delay.

For example, the preset CSI-RS resource quantity threshold is 2, and the preset rank quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate ranks corresponding to the CSI-RS resource 1 is 3, and a quantity of candidate ranks corresponding to the CSI-RS resource 2 is 3, quantities of candidate ranks corresponding to all the CSI-RS resources exceed the preset rank quantity threshold, and the first CSI does not meet the preset condition. In this case, the processing delay of the current CSI is the second processing delay.

Optionally, when it is determined that the first CSI does not meet any item included in the preset condition, whether another item included in the preset condition is met may not be determined. For example, if it is determined that the quantity of CSI-RS resources corresponding to the first CSI exceeds the preset CSI-RS resource quantity threshold, whether the quantity of candidate ranks corresponding to at least one CSI-RS resource of the first CSI does not exceed the preset rank quantity threshold may no longer be determined, to reduce a CSI processing procedure and reduce a CSI processing delay.

The foregoing is merely an example provided in this embodiment of this application, and examples in which the first CSI meets or does not meet the preset condition are not listed one by one in this application.

Optionally, when the terminal device reports the first CSI, the first CSI does not include an RI and/or a PMI. In other words, when reporting the first CSI, the terminal device does not report the RI and/or the PMI.

Optionally, when the terminal device reports the first CSI, the first CSI does not include an RI or a PMI. That is, the RI or the PMI is not reported.

Optionally, when the terminal device reports the first CSI, the first CSI includes only a CRI and/or a CQI. In other words, when reporting the first CSI, the terminal device reports only the CRI and/or the CQI.

It should be noted that, in Case 1 to Case 3, the preset condition may further include: a type of reported CSI is narrowband feedback, a bandwidth of CSI feedback is less than a preset bandwidth threshold, and the like. Details are described as follows:

Optionally, the preset condition further includes: a type of reported CSI is narrowband feedback.

The narrowband feedback means that the terminal device performs CSI feedback in a unit of a subband in a preset bandwidth. Generally, for a fixed preset bandwidth, a size of each subband is fixed, that is, a quantity of physical resource blocks (physical resource block, PRB) included in each subband is fixed. For example, the preset bandwidth includes 50 PRBs, and a size of a subband of the preset bandwidth is 4 or 8 PRBs. For example, the preset bandwidth may be some or all frequency resources in a bandwidth part (bandwidth part, BWP). For example, the BWP includes 50 resource blocks (resource block, RB) (numbered from 0 to 49, that is, an RB 0, an RB 1, ..., an RB 49), and the preset bandwidth may include 20 RBs, for example, from an RB 0 to an RB 19, or from an RB 21 to an RB 40. A meaning of the preset bandwidth is a bandwidth for which the terminal device needs to feed back CSI. If the preset bandwidth is 20 RBs from the RB 0 to the RB 19, the terminal device does not need to feed back the CSI on an RB other than the preset bandwidth. In other words, the terminal device needs to measure and feed back the channel state information only on the RBO to the RB 19.

In addition, the narrowband feedback may be continuous CSI feedback, or may be discrete CSI feedback. For example, a quantity of subbands included in the BWP is 5, and the five subbands are a subband 1 to a subband 5. For example, the CSI is fed back on b (1<=b<=5, where b is a positive integer) subbands in an order of the subband 1 to the subband 5, and the CSI is not fed back on remaining 5-b subbands. It is assumed that b is 2. If the narrowband feedback is continuous feedback, the terminal device may feed back channel state information of the subband 1 and the subband 2, or may feed back CSI of the subband 2 and the subband 3, but cannot feed back CSI of the subband 1 and the subband 3 (because discrete feedback is performed in this case). If the narrowband feedback is discrete feedback, the terminal device may feed back CSI in, for example, the subband 1 and the subband 3, and does not feed back CSI in other subbands.

It should be noted that, compared with broadband feedback, a granularity of CSI feedback that can be performed by the narrowband feedback is more refined. Therefore, for a URLLC small-packet service that has a high reliability and low latency requirement, narrowband feedback has a better effect than broadband feedback.

Optionally, if the type of the reported CSI is narrowband feedback, the preset condition further includes: a quantity of subbands for narrowband feedback does not exceed a preset subband quantity threshold. In this way, the quantity of subbands used for narrowband feedback is limited, so that time for CSI measurement based on a CSI-RS can be reduced. Therefore, CSI processing time can be further reduced, and accuracy of CSI fed back to the network device is improved.

Optionally, different subband quantity thresholds correspond to different first processing delays. For example, when the subband quantity threshold is 10, the first processing delay corresponding to the subband quantity threshold is A; when the subband quantity threshold is 15, the first processing delay corresponding to the subband quantity threshold is B. Optionally, A is less than B.

The preset subband quantity threshold may be specified in a protocol, or may be determined by the network device and notified to the terminal device.

Optionally, the preset condition further includes: a bandwidth used for CSI feedback is less than a preset bandwidth threshold. In this way, the bandwidth used for CSI feedback is limited, so that time for performing CSI measurement based on a CSI-RS can be reduced, to reduce CSI processing time and improve CSI accuracy.

If the type of the reported CSI is narrowband feedback, the preset condition further includes: the preset bandwidth used for CSI feedback is less than the preset bandwidth threshold. For example, the preset bandwidth threshold is 20 PRBs.

The preset bandwidth threshold may be specified in a protocol, or may be determined by the network device and notified to the terminal device.

Optionally, a bandwidth of a narrowband in the narrowband feedback, a quantity of narrowbands in the narrowband feedback, and the like may be configured in CSI-ReportConfig.

In addition, it should be noted that, in Case 1 to Case 3, the preset condition may further include: a type of reported CSI is broadband feedback. For a description of the broadband feedback, refer to the following content. Details are not described herein.

### Case 4:

Optionally, the preset condition is one or more of the following conditions: a quantity of CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. For example, the preset CSI-RS resource quantity threshold, the preset rank quantity threshold, and the preset precoding matrix quantity threshold may be specified in a protocol, or may be determined by the network device and notified to the terminal device.

The preset CSI-RS resource quantity threshold is I, I is a positive integer greater than 1, the preset rank quantity threshold is 1, the preset precoding matrix quantity threshold is N, and N is a positive integer greater than 1.

Optionally, if the preset rank quantity threshold is 1, that a quantity of candidate ranks corresponding to at least one CSI-RS resource does not exceed a preset rank quantity threshold includes: each CSI-RS resource corresponds to only one candidate rank.

Optionally, values of candidate ranks corresponding to different CSI-RS resources may be the same or may be different.

For example, the quantity of CSI-RS resources of the first CSI is 2, which are a CSI-RS resource 1 and a CSI-RS resource 2, a quantity of candidate ranks corresponding to the CSI-RS resource 1 is 1, and a quantity of candidate ranks corresponding to the CSI-RS resource 2 is 1. The candidate rank corresponding to the CSI-RS resource 1 is a rank 1, and the candidate rank corresponding to the CSI-RS resource 2 is a rank 2. A value of the rank 1 may be the same as or different from a value of the rank 2.

Optionally, there is a relationship between the quantity of candidate precoding matrices corresponding to the at least one CSI-RS resource and a value of a candidate rank. Therefore, for the at least one CSI-RS resource, the terminal device may determine, based on the value of the rank corresponding to the CSI-RS resource, the quantity of candidate precoding matrices corresponding to the CSI-RS resource. For example, for the CSI-RS resource 1 in the at least one CSI-RS resource, if a value of a candidate rank corresponding to the CSI-RS resource 1 is 1 (that is, rank=1), the quantity of candidate precoding matrices is 4; or if a value of a candidate rank corresponding to the CSI-RS resource 1 is 2 (that is, rank=2), the quantity of candidate precoding matrices is 2.

For example, for a manner of determining whether the preset condition is met, refer to the description in Case 1. Details are not described herein again.

The following provides description by using an example in which the preset condition includes one item.

For example, the preset condition includes: the quantity of CSI-RS resources does not exceed the preset CSI-RS resource quantity threshold. The preset CSI-RS resource quantity threshold is 2. Assuming that the quantity of CSI-RS resources corresponding to the first CSI is 2, the quantity of CSI-RS resources does not exceed the preset CSI-RS resource quantity threshold, and the first CSI meets the preset condition. In this case, the processing delay of the current CSI is the first processing delay.

For example, the preset condition includes: the quantity of candidate ranks corresponding to the at least one CSI-RS resource does not exceed the preset rank quantity threshold. The preset rank quantity threshold is 1. Assuming that the quantity of CSI-RS resources corresponding to the first CSI is 2, the two CSI-RS resources are a CSI-RS resource 1 and a CSI-RS resource 2, and a quantity of candidate ranks corresponding to the CSI-RS resource 1 or the CSI-RS resource 2 is 1, the quantity of candidate ranks corresponding to the at least one CSI-RS resource does not exceed the preset rank quantity threshold, and the first CSI meets the preset condition. In this case, the processing delay of the current CSI is the first processing delay.

For example, the preset condition includes: the quantity of candidate precoding matrices corresponding to the at least one CSI-RS resource does not exceed the preset precoding matrix quantity threshold. The preset precoding matrix quantity threshold is 2. Assuming that the quantity of CSI-RS resources corresponding to the first CSI is 2, the two CSI-RS resources are a CSI-RS resource 1 and a CSI-RS resource 2, and a quantity of candidate precoding matrices corresponding to the CSI-RS resource 1 or the CSI-RS resource 2 is 1, the quantity of candidate precoding matrices corresponding to the at least one CSI-RS resource does not exceed the preset precoding matrix quantity threshold, and the first CSI meets the preset condition. In this case, the processing delay of the current CSI is the first processing delay.

The following provides description by using an example in which the preset condition includes a plurality of items.

For example, the first condition includes two of the foregoing items. It is assumed that the preset condition includes: the quantity of CSI-RS resources does not exceed the preset CSI-RS resource quantity threshold, and the quantity of candidate precoding matrices corresponding to at least one CSI-RS resource does not exceed the preset precoding matrix quantity threshold.

When the preset condition includes a plurality items of the foregoing items, an example of determining, in the first manner, whether the first CSI meets the preset condition is as follows:

For example, the preset CSI-RS resource quantity threshold is 2, and the preset precoding matrix quantity threshold is 2. Assuming that the quantity of CSI-RS resources corresponding to the first CSI is 3 and exceeds the preset CSI-RS resource quantity threshold, the three CSI-RS resources are a CSI-RS resource 1, a CSI-RS resource 2, and a CSI-RS resource 3, a quantity of candidate precoding matrices corresponding to the CSI-RS resource 1 is 2, a quantity of candidate precoding matrices corresponding to the CSI-RS resource 2 is 2, and a quantity of candidate precoding matrices corresponding to the CSI-RS resource 3 is 3, the quantity of candidate precoding matrices corresponding to the at least one CSI-RS resource does not exceed the preset precoding matrix quantity threshold, and the first CSI meets the preset condition. In this case, the processing delay of the current CSI is the first processing delay.

For example, the preset CSI-RS resource quantity threshold is 2, and the preset precoding matrix quantity threshold is 2. Assuming that the quantity of CSI-RS resources corresponding to the first CSI is 3 and exceeds the preset CSI-RS resource quantity threshold, the three CSI-RS resources are a CSI-RS resource 1, a CSI-RS resource 2, and a CSI-RS resource 3, a quantity of candidate precoding matrices corresponding to the CSI-RS resource 1 is 3, a quantity of candidate precoding matrices corresponding to the CSI-RS resource 2 is 3, and a quantity of candidate precoding matrices corresponding to the CSI-RS resource 3 is 4, quantities of candidate precoding matrices corresponding to all CSI-RS resources exceed the preset precoding matrix quantity threshold, and the first CSI does not meet the preset condition. In this case, the processing delay of the current CSI is the second processing delay.

It should be noted that, if the first CSI meets one condition included in the preset condition, whether another condition included in the preset condition is met may not be determined. For example, if it is determined that the quantity of CSI-RS resources corresponding to the first CSI does not exceed the preset CSI-RS resource quantity threshold, whether the quantity of precoding matrices corresponding to at least one CSI-RS resource of the first CSI does not exceed the preset precoding matrix quantity threshold may no longer be determined, to reduce a CSI processing procedure and reduce a CSI processing delay.

When the preset condition includes a plurality items of the foregoing items, an example of determining, in the second manner, whether the first CSI meets the preset condition is as follows:

For example, the preset CSI-RS resource quantity threshold is 2, and the preset precoding matrix quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate precoding matrices corresponding to the CSI-RS resource 1 is 2, and a quantity of candidate precoding matrices corresponding to the CSI-RS resource 2 is 2, the quantity of candidate precoding matrices corresponding to the at least one CSI-RS resource does not exceed the preset precoding matrix quantity threshold, and the first CSI meets the preset condition. In this case, the processing delay of the current CSI is the first processing delay.

For example, the preset CSI-RS resource quantity threshold is 2, and the preset precoding matrix quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate precoding matrices corresponding to the CSI-RS resource 1 is 3, and a quantity of candidate precoding matrices corresponding to the CSI-RS resource 2 is 3, quantities of candidate precoding matrices corresponding to all the CSI-RS resources exceed the preset precoding matrix quantity threshold, and the first CSI does not meet the preset condition. In this case, the processing delay of the current CSI is the second processing delay.

Optionally, when it is determined that the first CSI does not meet any item included in the preset condition, whether another item included in the preset condition is met may not be determined. For example, if it is determined that the quantity of CSI-RS resources corresponding to the first CSI exceeds the preset CSI-RS resource quantity threshold, whether the quantity of precoding matrices corresponding to at least one CSI-RS resource of the first CSI does not exceed the preset precoding matrix quantity threshold may no longer be determined, to reduce a CSI processing procedure and reduce a CSI processing delay.

The foregoing is merely an example provided in this embodiment of this application, and examples in which the first CSI meets or does not meet the preset condition are not listed one by one in this application.

Optionally, when the terminal device reports the first CSI, the first CSI includes a CRI and a PMI.

Optionally, when the terminal device reports the first CSI, the first CSI does not include an RI. That is, the RI is not reported.

Optionally, when the terminal device reports the first CSI, the first CSI includes a CRI and/or a PMI and/or a CQI.

### Case 5:

Optionally, the preset condition is one or more of the following conditions: a quantity of CSI-RS resources does not exceed a preset CSI-RS resource quantity threshold, a quantity of candidate ranks corresponding to at least one CSI-RS resource does not exceed a preset rank quantity threshold, and each candidate rank corresponding to the at least one CSI-RS resource corresponds to one candidate precoding matrix. For example, the preset CSI-RS resource quantity threshold, the preset rank quantity threshold, and a preset precoding matrix quantity threshold may be specified in a protocol, or may be determined by the network device and notified to the terminal device.

The preset CSI-RS resource quantity threshold is 1, the preset rank quantity threshold is R, and R is a positive integer greater than 1.

Optionally, quantities of candidate ranks corresponding to different CSI-RS resources may be the same or may be different.

For example, there are two CSI-RS resources configured for the first CSI: a first resource and a second resource. A quantity of candidate ranks corresponding to the first resource is 2, and a quantity of candidate ranks corresponding to the second resource is 3.

Each candidate rank corresponding to the at least one CSI-RS resource corresponds to one candidate precoding matrix. For example, in one CSI-RS resource, a quantity of candidate ranks is 2, and values of the two ranks are rank=2 and rank=3. In this case, in the CSI-RS resource, a quantity of candidate precoding matrices is 2, and the two candidate precoding matrices are P1 and P2. Rank=2 corresponds to the precoding matrix P1, and rank=3 corresponds to the precoding matrix P2.

For example, for a manner of determining whether the preset condition is met, refer to the description in Case 1. Details are not described herein again.

The following provides description by using an example in which the preset condition includes one item.

For example, the preset condition includes: the quantity of CSI-RS resources does not exceed the preset CSI-RS resource quantity threshold. The preset CSI-RS resource quantity threshold is 2. Assuming that the quantity of CSI-RS resources corresponding to the first CSI is 2, the quantity of CSI-RS resources does not exceed the preset CSI-RS resource quantity threshold, and the first CSI meets the preset condition. In this case, the processing delay of the current CSI is the first processing delay.

For example, the preset condition includes: the quantity of candidate ranks corresponding to the at least one CSI-RS resource does not exceed the preset rank quantity threshold. The preset rank quantity threshold is 2. Assuming that the quantity of CSI-RS resources corresponding to the first CSI is 2, the two CSI-RS resources are a CSI-RS resource 1 and a CSI-RS resource 2, and a quantity of candidate ranks corresponding to the CSI-RS resource 1 or the CSI-RS resource 2 is 1 or 2, the quantity of candidate ranks corresponding to the at least one CSI-RS resource does not exceed the preset rank quantity threshold, and the first CSI meets the preset condition. In this case, the processing delay of the current CSI is the first processing delay.

For example, the preset condition includes: each candidate rank corresponding to at least one CSI-RS resource corresponds to one candidate precoding matrix. Assuming that a quantity of CSI-RS resources corresponding to the first CSI is 2, the two CSI-RS resources are a CSI-RS resource 1 and a CSI-RS resource 2, each candidate rank corresponding to the CSI-RS resource 1 corresponds to one candidate precoding matrix, and each candidate rank corresponding to the CSI-RS resource 2 corresponds to two candidate precoding matrices, each candidate rank corresponding to the at least one CSI-RS resource corresponds to one candidate precoding matrix, and the first CSI meets the preset condition. In this case, the processing delay of the current CSI is the first processing delay.

The following provides description by using an example in which the preset condition includes a plurality of items.

For example, the first condition includes two of the foregoing items. It is assumed that the preset condition includes: the quantity of CSI-RS resources does not exceed the preset CSI-RS resource quantity threshold, and the quantity of candidate ranks corresponding to at least one CSI-RS resource does not exceed the preset rank quantity threshold.

When the preset condition includes a plurality items of the foregoing items, an example of determining, in the first manner, whether the first CSI meets the preset condition is as follows:

For example, the preset CSI-RS resource quantity threshold is 2, and the preset rank quantity threshold is 2. Assuming that the quantity of CSI-RS resources corresponding to the first CSI is 3 and exceeds the preset CSI-RS resource quantity threshold, the three CSI-RS resources are a CSI-RS resource 1, a CSI-RS resource 2, and a CSI-RS resource 3, a quantity of candidate ranks corresponding to the CSI-RS resource 1 is 1, a quantity of candidate ranks corresponding to the CSI-RS resource 2 is 2, and a quantity of candidate ranks corresponding to the CSI-RS resource 3 is 3, the quantity of candidate ranks corresponding to the at least one CSI-RS resource does not exceed the preset rank quantity threshold, and the first CSI meets the preset condition. In this case, the processing delay of the current CSI is the first processing delay.

For example, the preset CSI-RS resource quantity threshold is 2, and the preset rank quantity threshold is 2. Assuming that the quantity of CSI-RS resources corresponding to the first CSI is 3 and exceeds the preset CSI-RS resource quantity threshold, the three CSI-RS resources are a CSI-RS resource 1, a CSI-RS resource 2, and a CSI-RS resource 3, a quantity of candidate ranks corresponding to the CSI-RS resource 1 is 3, a quantity of candidate ranks corresponding to the CSI-RS resource 2 is 3, and a quantity of candidate ranks corresponding to the CSI-RS resource 3 is 4, quantities of candidate ranks corresponding to all the CSI-RS resources exceed the preset rank quantity threshold, and the first CSI does not meet the preset condition. In this case, the processing delay of the current CSI is the second processing delay.

It should be noted that, if the first CSI meets one condition included in the preset condition, whether another condition included in the preset condition is met may not be determined. For example, if it is determined that the quantity of CSI-RS resources corresponding to the first CSI does not exceed the preset CSI-RS resource quantity threshold, whether the quantity of candidate ranks corresponding to at least one CSI-RS resource of the first CSI does not exceed the preset rank quantity threshold may no longer be determined, to reduce a CSI processing procedure and reduce a CSI processing delay.

When the preset condition includes a plurality items of the foregoing items, an example of determining, in the second manner, whether the first CSI meets the preset condition is as follows:

For example, the preset CSI-RS resource quantity threshold is 2, and the preset rank quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate ranks corresponding to the CSI-RS resource 1 is 2, and a quantity of candidate ranks corresponding to the CSI-RS resource 2 is 2, the quantity of candidate ranks corresponding to at least one CSI-RS resource does not exceed the preset rank quantity threshold, and the first CSI meets the preset condition. In this case, the processing delay of the current CSI is the first processing delay.

For example, the preset CSI-RS resource quantity threshold is 2, and the preset rank quantity threshold is 2. Assuming that the quantity of CSI-RS resources corresponding to the first CSI is 2 and does not exceed the preset CSI-RS resource quantity threshold, the two CSI-RS resources are a CSI-RS resource 1 and a CSI-RS resource 2, a quantity of candidate ranks corresponding to the CSI-RS resource 1 is 3, and a quantity of candidate ranks corresponding to the CSI-RS resource 2 is 3, quantities of candidate ranks corresponding to all the CSI-RS resources exceed the preset rank quantity threshold, and the first CSI does not meet the preset condition. In this case, the processing delay of the current CSI is the second processing delay.

Optionally, when it is determined that the first CSI does not meet any item included in the preset condition, whether another item included in the preset condition is met may not be determined. For example, if it is determined that the quantity of CSI-RS resources corresponding to the first CSI exceeds the preset CSI-RS resource quantity threshold, whether the quantity of candidate ranks corresponding to at least one CSI-RS resource of the first CSI does not exceed the preset rank quantity threshold may no longer be determined, to reduce a CSI processing procedure and reduce a CSI processing delay.

The foregoing is merely an example provided in this embodiment of this application, and examples in which the first CSI meets or does not meet the preset condition are not listed one by one in this application.

Optionally, when the terminal device reports the first CSI, the first CSI includes a CRI and an RI.

Optionally, when the terminal device reports the first CSI, the first CSI includes a CRI and a PMI.

Optionally, when the terminal device reports the first CSI, if the first CSI includes a PMI, the first CSI does not include an RI. If the first CSI includes an RI, the first CSI does not include a PMI.

It should be noted that, in Case 4 and Case 5, the preset condition may further include: a type of reported CSI is broadband feedback, a bandwidth of CSI feedback is less than a preset bandwidth threshold, and the like. Details are described as follows:

Optionally, the preset condition further includes: a type of reported CSI is broadband feedback.

A CQI is used as an example. The broadband feedback means that the terminal device feeds back only one CQI in a preset bandwidth, and the narrowband feedback means that the terminal device feeds back a CQI in at least one subband of the preset bandwidth. In other words, the narrowband feedback means that the terminal device feeds back at least one CQI in the preset bandwidth. For a description of the preset bandwidth, refer to the foregoing content. Details are not described herein again.

Optionally, if the type of the reported CSI is broadband feedback, the preset condition further includes: a preset bandwidth used for CSI feedback is less than a preset bandwidth threshold. For example, the preset bandwidth threshold is 20 PRBs.

The preset bandwidth threshold may be specified in a protocol, or may be determined by the network device and notified to the terminal device.

Optionally, a preset bandwidth for broadband feedback and the like may be configured in CSI-ReportConfig.

Optionally, in Case 4 and Case 5, the preset condition further includes: a type of reported CSI is narrowband feedback. For a description of the narrowband feedback, refer to the foregoing content. Details are not described herein again.

It should be noted that the first processing delays corresponding to the different preset conditions may be the same or may be different. For example, if the different preset conditions correspond to different first processing delays, a sequence of values of the first processing delays corresponding to the different preset conditions may be T1 ≥ T2 ≥ T3 ≥ T4 ≥ T5. T1 to T5 are first processing delays corresponding to the preset conditions in Case 1 to Case 5, respectively. For a description of the second processing delay, refer to the description of the first processing delay. Details are not described herein again.

Optionally, the preset condition in Case 1 to Case 5 may further include the following condition.

Optionally, the preset condition further includes one or more of the following conditions: a quantity of pieces of CSI that needs to be fed back does not exceed a preset CSI quantity threshold, a quantity of CSI-RSs that need to be measured does not exceed a preset CSI-RS quantity threshold, and CSI is transmitted on an uplink shared channel and no other data needs to be transmitted on the uplink shared channel. The preset CSI quantity threshold may be 1, and the preset CSI-RS quantity threshold may also be 1. The preset CSI quantity threshold and the preset CSI-RS quantity threshold may be specified in a protocol, or may be determined by the network device and notified to the terminal device. Optionally, the other data may be that no service data and/or no hybrid automatic repeat request acknowledgment (hybrid automatic repeat request acknowledgement, HARQ-ACK) need/needs to be transmitted on the uplink shared channel.

Optionally, the preset condition includes: the terminal device currently reports only one piece of CSI.

Optionally, the preset condition includes: a CSI sending manner is P-CSI, SP-CSI, or A-CSI. It should be noted that when the CSI sending manner is P-CSI, SP-CSI, or A-CSI, the terminal device reports only one piece of CSI at a same moment. The moment may be a current moment.

When the terminal device feeds back a plurality of pieces of CSI, that is, feeds back CSI obtained by performing channel and/or interference measurement based on a plurality of CSI-RSs, the terminal device needs to simultaneously process a plurality of CSI measurements, and feed back the plurality of pieces of CSI obtained by the plurality of CSI measurements to the network device. In this case, the terminal device needs a large quantity of computing resources, and the terminal device cannot use the large quantity of computing resources to process CSI measurement and feed back CSI obtained through the CSI measurement. Therefore, a processing delay when the terminal device needs to feed back a plurality of pieces of CSI increases, and the terminal device cannot correctly receive a data packet sent by the network device, resulting in poor reliability of service data transmission.

In this way, when the preset condition is met, the terminal device needs to feed back a small quantity of pieces of CSI or a small quantity of CSI-RSs need to be measured, and the CSI processing delay of the terminal device may be determined as the short first processing delay, to ensure high reliability of service data transmission. In addition, transmission time required when only the CSI is transmitted on an uplink control channel is short. Therefore, the first processing delay determined when the preset condition is met can be further reduced.

Optionally, the preset condition includes: the terminal device currently reports N pieces of CSI. The reporting the N pieces of CSI means that when reporting the first CSI, the terminal device further reports other CSI, for example, third CSI. N is less than or equal to a reported CSI quantity threshold. As described above, if the terminal device needs to simultaneously process a plurality CSI measurements and reporting, a plurality of resources need to be occupied. Therefore, a quantity of pieces of reported CSI is limited, so that a processing delay of processing the CSI by the terminal device can be reduced, to improve reliability of service data transmission. In another aspect, reporting of the plurality of pieces of CSI each may support different reporting content. For example, content reported in the first CSI includes a CRI and an RI, and content reported in the third CSI includes a PMI and an RI. The terminal device that supports reporting of the plurality of pieces of CSI may perform more flexible channel measurement.

Optionally, the preset condition includes: the terminal device currently reports N pieces of CSI. In a possible implementation, parameter items included in the N pieces of CSI are the same, but values of a same parameter item in different pieces of CSI may be the same or may be different. For example, content reported in the first CSI includes only a CQI, and content reported in the third CSI also includes only a CQI. However, a value of the CQI reported in the first CSI and a value of the CQI reported in the third CSI may be the same or may be different.

In a possible implementation, in the N pieces of CSI currently reported by the terminal device, preset conditions that need to be met when the terminal device reports the N pieces of CSI may be the same. In other words, delays in obtaining the N pieces of CSI by the terminal device are the same. For example, processing delays in obtaining, by the terminal device, the N pieces of CSI reported by the terminal device are all the first processing delay.

Optionally, the reporting of the N pieces of CSI is triggered by using the first information.

Optionally, the preset condition includes: a codebook type associated with reporting of the first CSI (that is, a codebook type used when a PMI is reported in the first CSI) is "typeI-SinglePanel". Optionally, the codebook type associated with the reporting of the first CSI is notified by the network device. Optionally, the network device configures the codebook type in CSI-ReportConfig.

Optionally, the preset condition may further include: a quantity of occupied computing processing units on the terminal device does not exceed a preset computing processing unit quantity threshold. The preset computing processing unit quantity threshold may be specified in a protocol, or may be determined by the network device and notified to the terminal device.

For example, the preset computing processing unit quantity threshold is zero. In this case, the preset condition further includes: Only zero computing processing unit of the terminal device is occupied.

Optionally, that only zero computing processing unit of the terminal device is occupied means that only zero processing unit is occupied in the second time. The second time is a previous OFDM symbol before the terminal device starts to occupy the computing processing unit. For example, for A-CSI, the second time is a last symbol of a physical downlink control channel (physical downlink control channel, PDCCH) that triggers the A-CSI.

Specifically, the computing processing unit may be used to process CSI.

For example, the computing processing unit may be a CSI processing unit (CSI processing unit, CPU).

For example, K (K is a positive integer) computing processing units can be simultaneously used by the terminal device to perform CSI processing. That is, the terminal device may simultaneously perform CSI processing by using a maximum of K computing processing units. Optionally, L (L is a positive integer, and L≤K) computing processing units are occupied, which may be understood as: L computing processing units are used to perform CSI processing in a same time unit.

Optionally, in this embodiment, the time unit may be an orthogonal frequency division multiplexing (orthogonal frequency division multiplexing, OFDM) symbol, a slot, a microslot, or the like. The following uses an example in which the time unit is an OFDM symbol to describe a process of CSI processing on the computing processing unit.

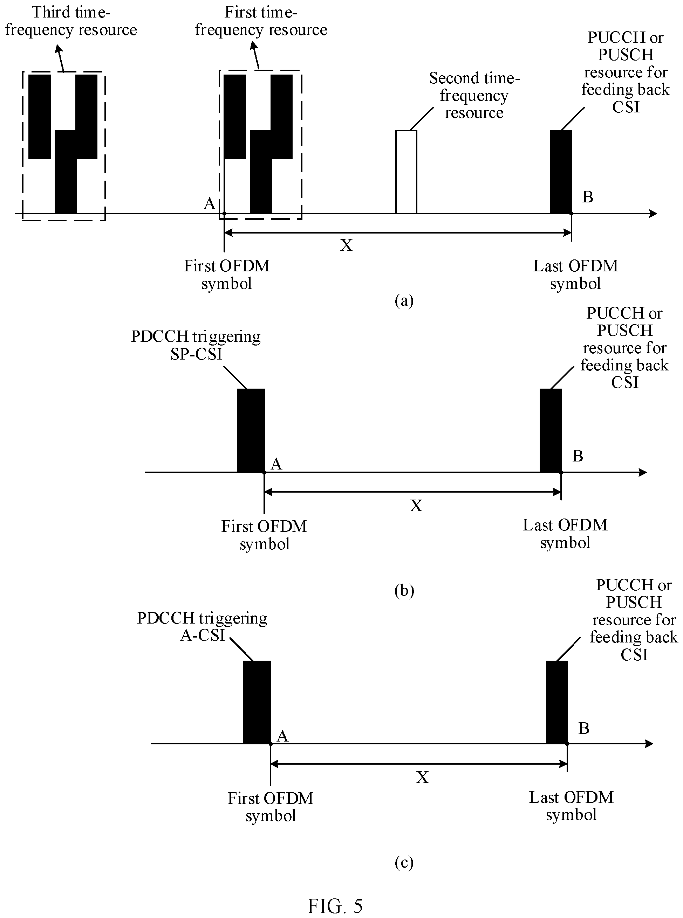

For example, for the P-CSI or SP-CSI other than SP-CSI transmitted on a PUSCH for the first time, time in which the computing processing unit is occupied by the P-CSI and the SP-CSI to perform CSI processing is shown in (a) in FIG. 5. The SP-CSI transmitted on the PUSCH for the first time refers to a first transmission of the SP-CSI triggered by a PDCCH, and the SP-CSI triggered by the PDCCH is transmitted on the PUSCH.

As shown in (a) in FIG. 5, time of a computing processing unit occupied by the P-CSI or the SP-CSI (in this example, the SP-CSI is SP-CSI other than the SP-CSI transmitted on the PUSCH for the first time) starts from a first OFDM symbol (corresponding to a point A) of a first time-frequency resource and ends at a last OFDM symbol (corresponding to a point B) that carries a physical uplink shared channel PUSCH and a physical uplink control channel PUCCH. The occupied computing processing unit is used to process the P-CSI or SP-CSI described by all OFDM symbols in an interval from the point A to the point B. X represents a quantity of all OFDM symbols in the interval from the point A to the point B.

The first time-frequency resource is a time-frequency resource that is before the second time-frequency resource and that is closest to the second time-frequency resource and that is associated with the P-CSI or the SP-CSI. The time-frequency resource associated with the P-CSI or the SP-CSI may be determined based on an association between a reporting configuration identifier and a CSI resource configuration identifier. For example, a time-frequency resource is a CSI-RS, a CSI-IM, or a synchronization signal and a physical broadcast channel block (synchronization signal and physical broadcast channel block, SSB) resource used for channel or interference measurement. The second time-frequency resource may be used by the terminal device to measure a CQI. Specifically, the terminal device obtains channel state information or interference information through measurement based on a downlink reference signal, and obtains the CQI with reference to the second time-frequency resource. Optionally, the second time-frequency resource may be a CSI reference resource (CSI reference resource).

For example, SP-CSI that is triggered by using, for example, a physical downlink control channel PDCCH and that is transmitted on a PUSCH for the first time is transmitted on the PUSCH. Time in which the SP-CSI occupies a computing processing unit to perform CSI processing is shown in (b) in FIG. 5.

As shown in (b) in FIG. 5, the time in which the SP-CSI occupies the computing processing unit starts from a first OFDM symbol after the PDCCH triggering the SP-CSI, and ends at a last OFDM symbol of the PUSCH reporting the CSI. The computing processing unit is used to process the SP-CSI described by all OFDM symbols in an interval from a point A to a point B. X represents a quantity of all OFDM symbols in the interval from the point A to the point B.

For example, time in which A-CSI occupies a computing processing unit is shown in (c) of FIG. 5.

As shown in (c) in FIG. 5, the time in which the A-CSI occupies the computing processing unit starts from a first OFDM symbol after a PDCCH triggering the A-CSI, and ends at a last symbol of a PUSCH reporting the CSI. The computing processing unit is used to process the A-CSI described by all OFDM symbols in an interval from a point A to a point B. X represents a quantity of all OFDM symbols in the interval from the point A to the point B.

Optionally, the preset condition may further include: the terminal device processes CSI feedback by using M (M is a positive integer) computing processing units. M may be a quantity of computing processing units that simultaneously process CSI and that are supported by the terminal device, that is, M=K.

For example, M=K=5. If the terminal device has a maximum of five computing processing units used to process CSI feedback, when processing the first CSI, the terminal device processes the CSI by using all the five computing processing units. In this way, the terminal device can process the first CSI quickly, to reduce a CSI processing delay.

In another embodiment, when none of the preset conditions listed in Case 1 to Case 5 is met, the terminal device determines that the CSI processing delay is the second processing delay.

According to the measurement reporting method shown in FIG. 2, the terminal device determines, based on whether the preset condition is met, that the CSI processing delay is the first processing delay or the second processing delay, and after the preset condition is met and the first processing delay expires after the terminal device receives the first information, feeds back the first CSI based on the feedback time, of the first CSI, indicated by the first information. In this way, the terminal device can adjust the CSI processing delay based on whether the preset condition is met, so that the CSI processing delay is reduced when the preset condition is met, and the terminal device sends timely and accurate first CSI to the network device, to ensure high reliability of service data transmission.

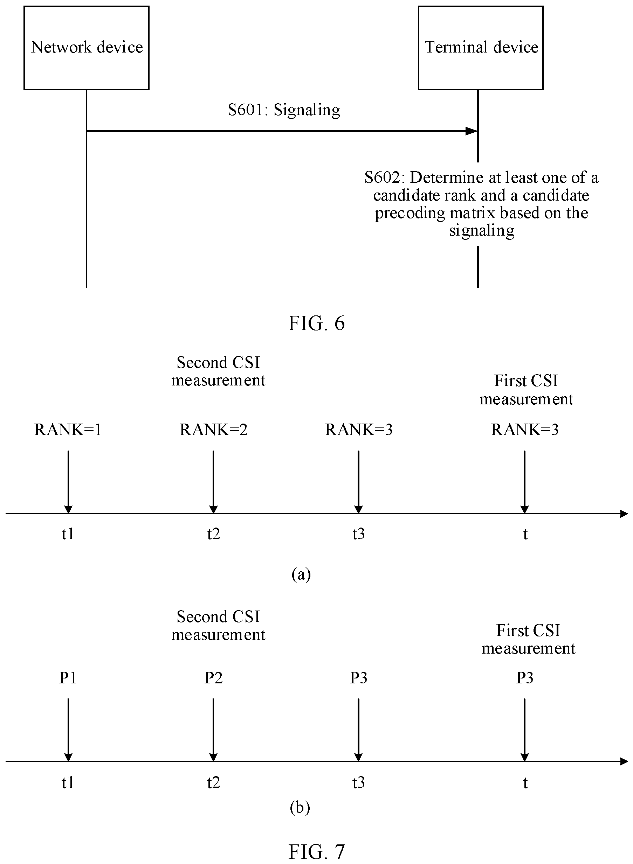

FIG. 6 is a schematic flowchart 2 of a measurement reporting method according to an embodiment of this application. As shown in FIG. 6, before step S202, the measurement reporting method further includes the following steps: S601 and S602.

S601: A network device sends indication information to a terminal device. Correspondingly, the terminal device receives the indication information sent by the network device.

The indication information indicates at least one of a candidate rank and a candidate precoding matrix, and the candidate rank and the candidate precoding matrix are a rank and a precoding matrix that are used for first CSI. Optionally, the indication information indicates a candidate rank, or the indication information indicates a candidate precoding matrix, or the indication information indicates a candidate precoding matrix and a candidate rank.

For example, the indication information directly indicates a value of the candidate rank. If the indication information indicates that rank=2, it indicates that the indication information indicates only one candidate rank, and a value of the candidate rank is 2. If the indication information indicates that rank=2, 3, it indicates that the indication information indicates two candidate ranks, a value of one candidate rank is 2, and a value of the other candidate rank is 3. Optionally, the indication information may be included in CSI-ReportConfig.

For example, the indication information directly indicates the candidate precoding matrix. If the indication information indicates that PMI=P1, it indicates that the indication information indicates only one candidate precoding matrix, and the candidate precoding matrix is P1. If the indication information indicates that PMI=P1, P3, it indicates that the indication information indicates two candidate precoding matrices, one candidate precoding matrix is P1, and the other candidate precoding matrix is P3.

Optionally, a value of the candidate precoding matrix is related to a value of the candidate rank.

For example, a quantity of candidate ranks is 2, and values of the two candidate ranks are 2 and 3. When rank=2, a corresponding value of the candidate precoding matrix is P1, and when rank=3, a corresponding value of the candidate precoding matrix is P2.

Optionally, the indication information indicates a CSI-RS resource configured for the first CSI. There is an association relationship between a quantity of ports of the CSI-RS resource and a rank. Therefore, the terminal device may determine the quantity of ports of the CSI-RS resource based on the indication information, to determine the rank of the terminal device based on the association relationship between the quantity of ports of the CSI-RS resource and the rank.

For example, the quantity of ports of the CSI-RS resource is equal to the rank. If the quantity of ports of the CSI-RS resource is 4, a value of the rank corresponding to the CSI-RS resource is 4, and rank=4.

For example, optionally, the quantity of ports of the CSI-RS resource corresponds to the rank. If the quantity of ports of the CSI-RS resource is 4, a value of a candidate rank corresponding to the CSI-RS resource is 3, and rank=3. If the quantity of ports of the CSI-RS resource is 3, a value of a candidate rank corresponding to the CSI-RS resource is 2, and rank=2.

**Table 1**

| CSI-RS resource | Quantity of ports | Candidate rank |
|---|---|---|
| CSI-RS resource 1 | 4 | Rank=2, 3 |
| CSI-RS resource 2 | 3 | Rank=1, 2 |

Optionally, the correspondence between the quantity of ports of the CSI-RS resource and the rank may be that one quantity of ports corresponds to a plurality of rank values. For example, as shown in Table 1, the CSI-RS resource 1 and the CSI-RS resource 2 are used as an example. If a quantity of ports of the CSI-RS resource 1 is 4, values of candidate ranks corresponding to the CSI-RS resource 1 are 2 and 3. If a quantity of ports of the CSI-RS resource 2 is 3, values of candidate ranks corresponding to the CSI-RS resource 2 are 1 and 2.

Optionally, the correspondence between the quantity of ports of the CSI-RS resource and the rank may be configured by the network device for the terminal device, or may be predefined in a protocol.

Optionally, the indication information indicates second CSI. The terminal device determines a rank or a precoding matrix of the second CSI as a rank or a precoding matrix of the first CSI.

Optionally, the indication information is indication information associated with the second CSI, for example, CSI resource configuration (CSI-ResourceConfig) or CSI reporting configuration (CSI-ReportConfig).

Optionally, the indication information is one or more of the following: a CSI reporting configuration identifier, a CSI-RS resource identifier, and a CSI-RS resource configuration identifier that are configured for the first CSI. The second CSI is determined based on one or more of the CSI reporting configuration identifier, the CSI-RS resource identifier, and the CSI-RS resource configuration identifier.

Optionally, the terminal device may determine the second CSI based on one or more of the following: the CSI reporting configuration identifier, the CSI-RS resource identifier, and the CSI-RS resource configuration identifier. The terminal device determines the rank of the second CSI as the rank of the first CSI, and determines the precoding matrix of the second CSI as the precoding matrix of the first CSI.

For example, a manner in which the terminal device determines the second CSI based on the indication information is as follows:

When the indication information is one of the CSI reporting configuration identifier, the CSI-RS resource identifier, and the CSI-RS resource configuration identifier that are configured for the first CSI, the terminal device determines the second CSI based on the item, to determine the rank and/or the precoding matrix of the second CSI.

When the indication information is any two of the CSI reporting configuration identifier, the CSI-RS resource identifier, and the CSI-RS resource configuration identifier that are configured for the first CSI, the terminal device determines the second CSI based on one or two of the two items, to determine the rank and/or the precoding matrix of the second CSI.

When the indication information is three of the CSI reporting configuration identifier, the CSI-RS resource identifier, and the CSI-RS resource configuration identifier that are configured for the first CSI, the terminal device determines the second CSI based on one, two, or three of the three items, to determine the rank and/or the precoding matrix of the second CSI.

Specifically, the CSI reporting configuration identifier, the CSI-RS resource identifier, and the CSI-RS resource configuration identifier that are configured for the first CSI are associated with a configuration identifier configured for the second CSI. Therefore, the terminal device may determine, based on the indication information, the second CSI that is associated with the CSI reporting configuration identifier, the CSI-RS resource configuration identifier, and the CSI-RS resource identifier that are configured for the first CSI, to determine the rank and/or the precoding matrix of the second CSI.

For example, the indication information is the CSI-RS resource identifier configured for the first CSI. The CSI-RS resource identifier configured for the first CSI is 1. A corresponding CSI-RS resource configuration identifier may be determined based on the CSI-RS resource identifier. For example, the corresponding CSI-RS resource configuration identifier is 2. The corresponding CSI-RS resource configuration identifier may be associated with other CSI measurement that has been measured and reported, that is, the second CSI, to obtain the rank and/or the precoding matrix of the second CSI. In this way, the rank obtained by using the second CSI is used as the rank of the first CSI, so that time required for CSI processing can be reduced, and a CSI processing delay can be shortened, to ensure reliability of service data transmission.

For example, the indication information is the CSI-RS resource identifier configured for the first CSI. A rank and a precoding matrix of CSI measurement corresponding to the CSI-RS resource identifier are a preset rank and a preset precoding matrix. The preset rank and the preset precoding matrix may be a rank and a precoding matrix of CSI measurement configured for the CSI-RS resource identifier in a past period of time. Therefore, the terminal device may directly determine the rank and/or the precoding matrix of the first CSI based on the CSI-RS resource identifier configured for the first CSI. In this way, the rank obtained by using the second CSI is used as the rank of the first CSI, so that time required for CSI processing can be reduced, and a CSI processing delay can be shortened, to ensure reliability of service data transmission.

Optionally, the terminal device determines the second CSI based on one or more of the following: the CSI reporting configuration identifier, the CSI-RS resource identifier, and the CSI-RS resource configuration identifier. The second CSI is at least one of CSI measurement in a past period of time. Then, the terminal device determines the rank or the precoding matrix of the second CSI as the rank or the precoding matrix of the first CSI.

Optionally, the indication information may be a resource set identifier, for example, NZP-CSI-RS-ResourceSetId.

Optionally, the indication information is one or more of the CSI reporting configuration identifier, the CSI-RS resource identifier, the CSI-RS resource configuration identifier, and the resource set identifier that are configured for the first CSI.

Optionally, the terminal device determines a rank or a precoding matrix of CSI measurement closest to a first moment as the rank or the precoding matrix of the first CSI.

The first moment is a current moment, or a CSI feedback moment, or a CSI measurement moment.

For example, the first moment is a current moment, and the indication information is a CSI reporting configuration identifier. The CSI reporting configuration identifier may be periodic, semi-persistent, or aperiodic. As shown in (a) in FIG. 7, there are a plurality of pieces of second CSI, and different pieces of second CSI have different ranks (or a same rank). A rank of second CSI at a moment t1 is rank=1, a rank of second CSI at a moment t2 is rank=2, and a rank of second CSI at a moment t3 is rank=3. The first moment is t, and t-t1>t-t2>t-t3. Therefore, the second CSI closest to the first moment is the second CSI at the moment t3, and the rank of the first CSI is rank=3.

For example, the first moment is a current moment, and the indication information is a CSI reporting configuration identifier. The CSI reporting configuration identifier may be periodic, semi-persistent, or aperiodic. As shown in (b) in FIG. 7, there are a plurality of pieces of second CSI, and different pieces of second CSI have different precoding matrices (or a same precoding matrix). A precoding matrix of second CSI at a moment t1 is P1, a precoding matrix of second CSI at a moment t2 is P2, and a precoding matrix of second CSI at a moment t3 is P3. The first moment is t, and t-t1>t-t2>t-t3. Therefore, the second CSI closest to the first moment is the second CSI at the moment t3, and the precoding matrix of the first CSI is P3.

In this way, compared with second CSI that is far away from the first moment, the rank or the precoding matrix of the second CSI that is closest to the first moment is more applicable to a current channel and/or current interference, and can better ensure high reliability of service data transmission.

Optionally, if a difference between a moment of the second CSI and a moment of the first CSI is large, a channel between the terminal device and the network device may change. In this case, if the rank of the second CSI is determined as the rank of the first CSI, an error may be large. Therefore, if a difference between a moment at which the second CSI closest to the first moment is located and the first moment is greater than a preset time interval, the rank of the second CSI closest to the first moment is not used.

Optionally, the terminal device determines a default rank as the rank of the first CSI, or a rank notified by the terminal device, or a rank related to the quantity of ports of the CSI-RS resource of the first CSI. In this way, accuracy of the rank of the first CSI can be better ensured.

Optionally, if a difference between a moment of the second CSI and a moment of the first CSI is large, a channel between the terminal device and the network device may change. In this case, if the precoding matrix of the second CSI is determined as the precoding matrix of the first CSI, an error may be large. Therefore, if a difference between a moment at which the second CSI closest to the first moment is located and the first moment is greater than a preset time interval, the precoding matrix of the second CSI closest to the first moment is not used.

Optionally, the terminal device determines a default precoding matrix as the precoding matrix of the first CSI or a precoding matrix notified by the terminal device. In this way, accuracy of the precoding matrix of the first CSI can be better ensured.

Optionally, the terminal device may directly determine a rank of CSI measurement closest to the first moment as the rank of the first CSI.

Optionally, if a difference between a moment at which CSI measurement closest to the first moment is located and the first moment is less than a preset time interval, a rank of CSI closest to the first moment is used as the rank of the first CSI. If the difference between the moment at which the CSI measurement is located and the first moment is greater than the preset time interval, the rank of the CSI measurement closest to the first moment is not used as the rank of the first CSI.

Optionally, the terminal device uses a default rank as the rank of the first CSI or uses a precoding matrix notified by the terminal device. In this way, accuracy of the precoding matrix of the first CSI can be better ensured.

In some embodiments, the terminal device may directly determine a rank used for downlink channel data transmission closest to the first moment as the rank of the first CSI.

Optionally, if a difference between a moment at which the downlink channel data transmission closest to the first moment is located and the first moment is greater than a preset time interval, the rank used for downlink channel data transmission is not used.

Optionally, the terminal device uses a default rank as the rank of the first CSI.

In some embodiments, if the second CSI closest to the first moment is determined in the foregoing manner, and an interval between the moment at which the second CSI is located and the first moment exceeds a preset time interval, the rank of the second CSI closest to the first moment is not used.

Optionally, the terminal device may determine a rank used for downlink channel data transmission closest to the first moment as the rank of the first CSI.

In some embodiments, the terminal device may directly determine the rank used for downlink channel data transmission closest to the first moment as the rank of the first CSI.

Optionally, if a difference between a moment at which the downlink channel data transmission closest to the first moment is located and the first moment is greater than a preset time interval, the rank used for downlink channel data transmission is not used.

Optionally, the terminal device uses a default rank as the rank of the first CSI.

In some embodiments, if the second CSI closest to the first moment is determined in the foregoing manner, and an interval between the moment at which the second CSI is located and the first moment exceeds a preset time interval, the precoding matrix of the second CSI closest to the first moment is not used.

A precoding matrix used for downlink channel data transmission closest to the first moment may be determined as the precoding matrix of the first CSI.

In some embodiments, the terminal device may directly determine the precoding matrix used for downlink channel data transmission closest to the first moment as the precoding matrix of the first CSI.

Optionally, if a difference between a moment at which the downlink channel data transmission closest to the first moment is located and the first moment is greater than a preset time interval, the precoding matrix used for downlink channel data transmission is not used.

Optionally, the terminal device uses a default precoding matrix as the precoding matrix of the first CSI.

It should be noted that the preset time interval, the default precoding matrix, and the default rank may all be specified in a protocol, or may be determined by the network device and notified to the terminal device.

In some embodiments, the indication information may be carried in signaling.

Optionally, the first information may be carried in signaling.

Optionally, the first information and the indication information may be carried in same signaling.

For example, the signaling is radio resource control protocol (Radio Resource Control, RRC) signaling.

The signaling may be the first information in the foregoing embodiment. Optionally, the first information sent by the network device to the terminal device includes the indication information.

S602: The terminal device determines one or more of the candidate rank and the candidate precoding matrix based on the signaling.

For specific implementation of this step, refer to content in step S601. Details are not described herein again.

According to the measurement reporting method shown in FIG. 6, the terminal device uses the rank obtained by using the second CSI as the rank of the first CSI, so that time required for CSI processing can be reduced, and a CSI processing delay can be shortened, to ensure reliability of service data transmission.

In embodiments of this application, a time domain symbol may be an orthogonal frequency division multiplexing (orthogonal frequency division multiplexing, OFDM) symbol, or may be a discrete Fourier transform spread spectrum OFDM (Discrete Fourier Transform-spread-OFDM, DFT-s-OFDM) symbol. Unless otherwise specified, symbols in embodiments of this application are all time domain symbols.

It may be understood that, in embodiments of this application, the PDCCH and the PUSCH are merely used as examples of a downlink control channel and an uplink data channel. In different systems and different scenarios, the data channel and the control channel may have different names. This is not limited in embodiments of this application.

In embodiments of this application, a function of the network device may alternatively be performed by a module (for example, a chip) in the network device, or may be performed by a control subsystem including a function of the network device. The control subsystem including a network device function herein may be a control center in an industrial internet of things application scenario such as a smart grid, factory automation, and intelligent transportation. A function of the terminal device may also be performed by a module (for example, a chip) in the terminal device.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

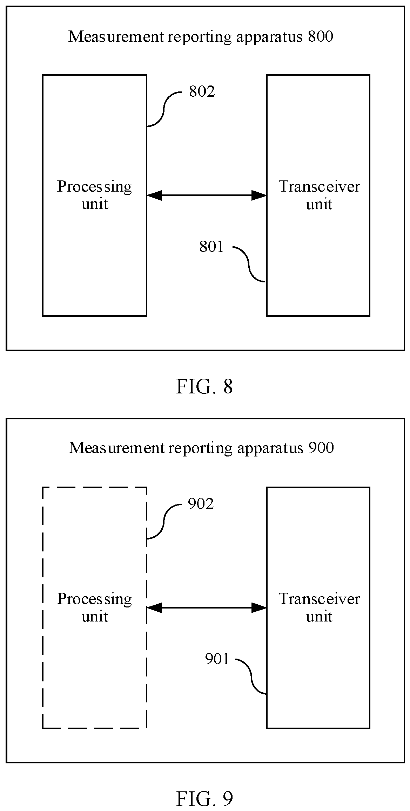

Based on FIG. 2 and FIG. 6, the measurement reporting method provided in embodiments of this application is described in detail. The following describes in detail a measurement reporting apparatus provided in embodiments of this application with reference to FIG. 8 to FIG. 10.

FIG. 8 is a schematic composition diagram of a measurement reporting apparatus according to an embodiment of this application. The measurement reporting apparatus is used in the communication system shown in FIG. 1, and perform a function of the terminal device in the measurement reporting method shown in FIG. 2 or FIG. 6. For ease of description, FIG. 8 shows only main components of the measurement reporting apparatus.

As shown in FIG. 8, the measurement reporting apparatus 800 includes a transceiver unit 801 and a processing unit 802.

The transceiver unit 801 is configured to receive first information, where the first information indicates feedback time of first CSI, and the first information is used to trigger feedback of the first CSI.

The processing unit 802 is configured to: if the feedback time of the first CSI is after first time, feed back the first CSI based on the first information, where the first time is determined based on second time and a first processing delay, or the first time is determined based on the second time and a second processing delay. The second time is time of starting CSI measurement. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

In a possible implementation, the preset condition is one or more of the following conditions: a quantity of CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is an integer greater than 1, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

In a possible implementation, the transceiver unit 801 is further configured to receive indication information, where the indication information indicates at least one of a candidate rank and a candidate precoding matrix.

In a possible implementation, the indication information indicates a CSI-RS resource for the first CSI, and there is an association relationship between a quantity of ports of the CSI-RS resource and the candidate rank.

In a possible implementation, the indication information is one or more of the following: a CSI reporting configuration identifier, a CSI-RS resource identifier, and a CSI-RS resource configuration identifier that are configured for the first CSI.

The processing unit 802 is further configured to determine second CSI based on one or more of the following: the CSI reporting configuration identifier, the CSI-RS resource identifier, and the CSI-RS resource configuration identifier.

The processing unit 802 is further configured to determine a rank of the second CSI as a rank of the first CSI, and/or determine a precoding matrix of the second CSI as a precoding matrix of the first CSI.

In a possible implementation, the processing unit 802 is configured to determine a rank of second CSI closest to the first moment as the rank of the first CSI; and/or the processing unit 802 is further configured to determine a precoding matrix of the second CSI closest to the first moment as the precoding matrix of the first CSI.

In a possible implementation, the processing unit 802 is further configured to determine a rank used for downlink data channel transmission closest to a first moment as a rank of the first CSI, and/or the processing unit 802 is further configured to determine a precoding matrix used for downlink data channel transmission closest to the first moment as a precoding matrix of the first CSI.

It should be noted that the transceiver unit 801 may include a receiving unit and a sending unit (not shown in FIG. 8). The receiving unit is configured to receive data from a network device, and the sending unit is configured to send data to the network device. A specific implementation of the transceiver unit 801 is not specifically limited in this application.

Optionally, the measurement reporting apparatus 800 may further include a storage unit (not shown in FIG. 8). The storage unit stores a program or instructions. When the processing unit executes the program or the instructions, the measurement reporting apparatus 800 is enabled to perform a function of the terminal device in the measurement reporting method shown in FIG. 2 or FIG. 6.

It should be noted that the measurement reporting apparatus 800 may be a terminal device, or may be a component or a combined component in the terminal device, or may be a chip or a chip system disposed in the terminal device. This is not limited in this application.

In addition, for technical effects of the measurement reporting apparatus 800, refer to the technical effects of the measurement reporting method shown in FIG. 2 or FIG. 6. Details are not described herein again.

FIG. 9 is a schematic composition diagram 2 of a measurement reporting apparatus according to an embodiment of this application. The measurement reporting apparatus is used in the communication system shown in FIG. 1, and perform a function of the network device in the measurement reporting method shown in FIG. 2 or FIG. 6. For ease of description, FIG. 9 shows only main components of the measurement reporting apparatus.

As shown in FIG. 9, the measurement reporting apparatus 900 includes a transceiver unit 901.

The transceiver unit 901 is configured to send first information, where the first information indicates feedback time of first channel state information CSI. The feedback time of the first CSI is after first time, and the first time is determined based on second time and a first processing delay or the first time is determined based on the second time and a second processing delay. The first processing delay is a CSI processing delay determined when a preset condition is met, the second processing delay is a CSI processing delay determined when the preset condition is not met, and the second processing delay is longer than the first processing delay. The second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

In a possible implementation, the preset condition is one or more of the following conditions: a quantity of channel state information-reference signal CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold. The CSI-RS resource is for measuring the first CSI. When the first CSI includes a rank indicator RI, the RI indicates a target rank, and the target rank is one of the candidate ranks. When the first CSI includes a precoding matrix indicator PMI, the PMI indicates a target precoding matrix, and the target precoding matrix is one of the candidate precoding matrices.

In a possible implementation, the preset CSI-RS resource quantity threshold is I, I is an integer greater than 1, the preset rank quantity threshold is 1, the preset precoding matrix quantity threshold is N, and N is an integer greater than or equal to 1.

In a possible implementation, the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, where the preset rank quantity threshold is R, and R is an integer greater than 1.

The transceiver unit 901 is further configured to send indication information, where the indication information indicates at least one of a candidate rank and a candidate precoding matrix.

In a possible implementation, the indication information indicates a CSI-RS resource configured for the first CSI, and there is an association relationship between a quantity of ports of the CSI-RS resource and a quantity of candidate ranks.

In a possible implementation, the indication information is one or more of the following: a CSI reporting configuration identifier, a CSI-RS resource identifier, and a CSI-RS resource configuration identifier that are configured for the first CSI. Second CSI is determined based on one or more of the CSI reporting configuration identifier, the CSI-RS resource identifier, and the CSI-RS resource configuration identifier. A rank of the first CSI is a rank of the second CSI, and/or a precoding matrix of the first CSI is a precoding matrix of the second CSI.

In a possible implementation, the rank of the first CSI is a rank of second CSI closest to a first moment; and/or the precoding matrix of the first CSI is a precoding matrix of the second CSI closest to the first moment.

In another possible implementation, a rank of the first CSI is a rank used for downlink data channel transmission closest to a first moment; and/or a precoding matrix of the first CSI is a precoding matrix used for downlink data channel transmission closest to the first moment.

It should be noted that the transceiver unit 901 may include a receiving unit and a sending unit (not shown in FIG. 9). The receiving unit is configured to receive data or signaling from a terminal device, and the sending unit is configured to send data or signaling to the terminal device. A specific implementation of the transceiver unit 901 is not specifically limited in this application.

Optionally, the measurement reporting apparatus 900 may further include a storage unit (not shown in FIG. 9). The storage unit stores a program or instructions. When the processing unit executes the program or the instructions, the measurement reporting apparatus 900 is enabled to perform a function of the network device in the measurement reporting method shown in FIG. 2 or FIG. 6.

It should be noted that the measurement reporting apparatus 900 may be a network device, or may be a component or a combined component in the network device, or may be a chip or a chip system disposed in the network device. This is not limited in this application.

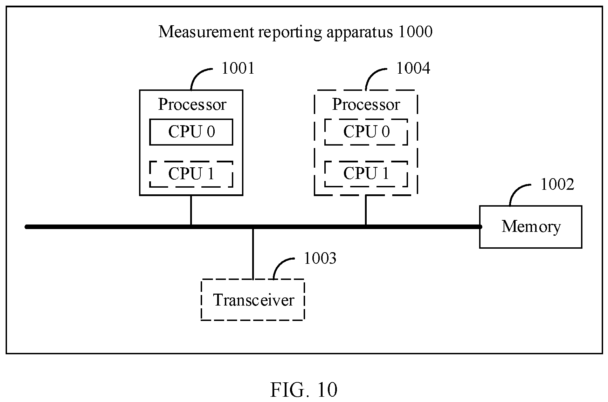

FIG. 10 is a schematic diagram of a hardware structure of a measurement reporting apparatus according to an embodiment of this application. The measurement reporting apparatus is used in the communication system shown in FIG. 1, and perform a function of the terminal device or the network device in the measurement reporting method shown in FIG. 2 or FIG. 6.

The measurement reporting apparatus 1000 may be the terminal device or the network device, or may be a chip used in the terminal device or the network device, or another component that has a function of the terminal device or the network device. As shown in FIG. 10, the measurement reporting apparatus 1000 may include a processor 1001, a memory 1002, and a transceiver 1003. The processor 1001 is coupled to the memory 1002 and the transceiver 1003, for example, may be connected through a communication bus.

The following describes each component of the measurement reporting apparatus 1000 in detail with reference to FIG. 10.

The processor 1001 is a control center of the measurement reporting apparatus 1000, and may be one processor, or may be a general name of a plurality of processing elements. For example, the processor 1001 may be a central processing unit (central processing unit, CPU), or an application specific integrated circuit (application specific integrated circuit, ASIC), or may be configured as one or more integrated circuits implementing embodiments of this application, for example, one or more microprocessors (digital signal processor, DSP) or one or more field programmable gate arrays (field programmable gate array, FPGA).

The processor 1001 may perform various functions of the measurement reporting apparatus 1000 by running or executing a software program stored in the memory 1002 and invoking data stored in the memory 1002.

In specific implementation, in an embodiment, the processor 1001 may include one or more CPUs, for example, a CPU 0 and a CPU 1 in FIG. 10.

In specific implementation, in an embodiment, the measurement reporting apparatus 1000 may also include a plurality of processors, for example, the processor 1001 and a processor 1004 shown in FIG. 10. Each of the processors may be a single-core processor (single-CPU) or a multi-core processor (multi-CPU). The processor herein may be one or more communication devices, circuits, and/or processing cores configured to process data (for example, computer program instructions).

For example, the memory 1002 may be a read-only memory (read-only memory, ROM) or another type of static storage device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 1002 is not limited thereto. The memory 1002 may be integrated into the processor 1001, or may exist independently, and is coupled to the processor 1001 through an input/output port (not shown in FIG. 10) of the measurement reporting apparatus 1000. This is not specifically limited in this embodiment of this application.

The memory 1002 is configured to store the software program for executing the solutions in this application, and the processor 1001 controls execution. For a specific implementation, refer to the foregoing method embodiments. Details are not described herein again.

Optionally, the transceiver 1003 is configured to communicate with another measurement reporting apparatus. For example, the measurement reporting apparatus 1000 is a terminal device, and the transceiver 1003 may be configured to communicate with another device. In addition, the transceiver 1003 may include a receiver and a transmitter (not separately shown in FIG. 10). The receiver is configured to implement a receiving function, and the transmitter is configured to implement a sending function. The transceiver 1003 may be integrated into the processor 1001, or may exist independently, and is coupled to the processor 1001 through an input/output port (not shown in FIG. 10) of the measurement reporting apparatus 1000. This is not specifically limited in this embodiment of this application.

It should be noted that a structure of the measurement reporting apparatus 1000 shown in FIG. 10 does not constitute a limitation on the measurement reporting apparatus. An actual measurement reporting apparatus may include more or fewer components than those shown in the figure, or some components may be combined, or there may be different component arrangements.

In addition, for technical effects of the measurement reporting apparatus 1000 shown in FIG. 10, refer to the technical effects of the measurement reporting method shown in FIG. 2 or FIG. 6. Details are not described herein again.

An embodiment of this application provides a chip system. The chip system includes a processor and an input/output port. The processor is configured to implement a processing function in the foregoing method embodiments, and the input/output port is configured to implement a transceiver function in the foregoing method embodiments.

In a possible design, the chip system further includes a memory. The memory is configured to store program instructions and data for implementing functions in the foregoing method embodiments.

The chip system may include a chip, or may include a chip and another discrete component.

An embodiment of this application provides a communication system. The system includes a network device and a terminal device.

An embodiment of this application provides a computer-readable storage medium, and the computer-readable storage medium stores computer instructions. When the computer instructions are run on a computer, the computer is enabled to perform the measurement reporting method in the foregoing method embodiments.

An embodiment of this application provides a computer program product including instructions. The computer program product includes a computer program or instructions. When the computer program or the instructions are run on a computer, the computer is enabled to perform the measurement reporting method in the foregoing method embodiments.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memory, RAM) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units or modules, and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit or module, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units or modules is merely logical function division, or may be other division during actual implementation. For example, multiple units or modules may be combined or integrated into another system, some units or modules may be ignored, or functions corresponding some units or modules are not performed. In addition, the displayed or discussed mutual couplings or direct couplings or communication connections may be implemented through some interfaces. The indirect couplings or communication connections between the apparatuses or units/modules may be implemented in electrical, mechanical, or other forms.

The units/modules described as separate parts may or may not be physically separate, and parts displayed as units/modules may or may not be physical units/modules, may be located in one position, or may be distributed on multiple network units/modules. Some or a part of the units/modules may be selected based on actual requirements to achieve the objectives of the solutions of embodiments.

In addition, the functional units/modules in embodiments of this application may be integrated into one processing unit/module, each of the units/modules may exist alone physically, or two or more units/modules are integrated into one unit/module.

When the functions are implemented in a form of a software functional unit/module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement reporting method, wherein the method comprises:
receiving first information, wherein the first information indicates feedback time of first channel state information CSI; and
if the feedback time of the first CSI is after first time, feeding back the first CSI based on the first information, wherein the first time is determined based on second time and a first processing delay, or the first time is determined based on the second time and a second processing delay, wherein
the first processing delay is a CSI processing delay determined when a preset condition is met, the second processing delay is a CSI processing delay determined when the preset condition is not met, and the second processing delay is longer than the first processing delay; and
the second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

2. The measurement reporting method according to claim 1, wherein the preset condition is one or more of the following conditions: a quantity of channel state information-reference signal CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold; and
the CSI-RS resource is for measuring the first CSI; when the first CSI comprises a rank indicator RI, the RI indicates a target rank, and the target rank is one of the candidate ranks; and when the first CSI comprises a precoding matrix indicator PMI, the PMI indicates a target precoding matrix, and the target precoding matrix is one of the candidate precoding matrices.

3. The measurement reporting method according to claim 2, wherein the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

4. The measurement reporting method according to claim 1, wherein the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold; the CSI-RS resource is for measuring the first CSI; when the first CSI comprises a rank indicator RI, the RI indicates a target rank, and the target rank is one of the candidate ranks; and when the first CSI comprises a precoding matrix indicator PMI, the PMI indicates a target precoding matrix, and the target precoding matrix is one of the candidate precoding matrices.

5. The measurement reporting method according to claim 4, wherein the preset CSI-RS resource quantity threshold is I, I is an integer greater than 1, the preset rank quantity threshold is 1, the preset precoding matrix quantity threshold is N, and N is an integer greater than or equal to 1.

6. The measurement reporting method according to claim 1, wherein the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, wherein the preset rank quantity threshold is R, and R is an integer greater than 1.

7. The measurement reporting method according to claim 1, wherein the method further comprises:
receiving indication information, wherein the indication information indicates at least one of a candidate rank and a candidate precoding matrix.

8. The measurement reporting method according to claim 7, wherein the indication information indicates a CSI-RS resource configured for the first CSI, and there is an association relationship between a quantity of ports of the CSI-RS resource and the candidate rank.

9. The measurement reporting method according to claim 7, wherein the indication information is one or more of the following: a CSI reporting configuration identifier, a CSI-RS resource identifier, and a CSI-RS resource configuration identifier that are configured for the first CSI; and the method further comprises:
determining second CSI based on one or more of the following: the CSI reporting configuration identifier, the CSI-RS resource identifier, and the CSI-RS resource configuration identifier; and
determining a rank of the second CSI as a rank of the first CSI; and/or determining a precoding matrix of the second CSI as a precoding matrix of the first CSI.

10. The measurement reporting method according to claim 9, wherein
the determining a rank of the second CSI as a rank of the first CSI comprises: determining a rank of second CSI closest to a first moment as the rank of the first CSI; and/or
the determining a precoding matrix of the second CSI as a precoding matrix of the first CSI comprises:
determining a precoding matrix of the second CSI closest to the first moment as the precoding matrix of the first CSI.

11. The measurement reporting method according to claim 1, wherein the method further comprises:
determining a rank used for downlink data channel transmission closest to a first moment as a rank of the first CSI, and/or determining a precoding matrix used for downlink data channel transmission closest to the first moment as a precoding matrix of the first CSI.

12. A measurement reporting method, wherein the method comprises:
sending first information, wherein the first information indicates feedback time of first channel state information CSI, the feedback time of the first CSI is after first time, and the first time is determined based on second time and a first processing delay or the first time is determined based on the second time and a second processing delay, wherein
the first processing delay is a CSI processing delay determined when a preset condition is met, the second processing delay is a CSI processing delay determined when the preset condition is not met, and the second processing delay is longer than the first processing delay; and
the second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

13. The measurement reporting method according to claim 12, wherein the preset condition is one or more of the following conditions: a quantity of channel state information-reference signal CSI-RS resources does not exceed a preset CSI-RS resource quantity threshold, a quantity of ports of CSI-RS resources does not exceed a preset port quantity threshold, a quantity of candidate ranks RANKs does not exceed a preset rank quantity threshold, and a quantity of candidate precoding matrices does not exceed a preset precoding matrix quantity threshold; and
the CSI-RS resource is for measuring the first CSI; when the first CSI comprises a rank indicator RI, the RI indicates a target rank, and the target rank is one of the candidate ranks; and when the first CSI comprises a precoding matrix indicator PMI, the PMI indicates a target precoding matrix, and the target precoding matrix is one of the candidate precoding matrices.

14. The measurement reporting method according to claim 13, wherein the preset CSI-RS resource quantity threshold is 1, the preset port quantity threshold is M, M is a positive integer, the preset rank quantity threshold is 1, the preset precoding matrix quantity threshold is N, and N is an integer greater than or equal to 1.

15. The measurement reporting method according to claim 12, wherein the preset condition is one or more of the following conditions: a quantity of channel state information-reference signal CSI-RS resources does not exceed a preset CSI-RS resource quantity threshold, a quantity of candidate ranks corresponding to at least one CSI-RS resource does not exceed a preset rank quantity threshold, and a quantity of candidate precoding matrices corresponding to the at least one CSI-RS resource does not exceed a preset precoding matrix quantity threshold; the CSI-RS resource is for measuring the first CSI; when the first CSI comprises a rank indicator RI, the RI indicates a target rank, and the target rank is one of the candidate ranks; and when the first CSI comprises a precoding matrix indicator PMI, the PMI indicates a target precoding matrix, and the target precoding matrix is one of the candidate precoding matrices.

16. The measurement reporting method according to claim 15, wherein the preset CSI-RS resource quantity threshold is I, I is an integer greater than 1, the preset rank quantity threshold is 1, the preset precoding matrix quantity threshold is N, and N is an integer greater than or equal to 1.

17. The measurement reporting method according to claim 12, wherein the preset condition is one or more of the following conditions: a quantity of channel state information-reference signal CSI-RS resources does not exceed 1, a quantity of candidate ranks corresponding to at least one CSI-RS resource does not exceed a preset rank quantity threshold, and each candidate rank corresponding to the at least one CSI-RS resource corresponds to one candidate precoding matrix, wherein the preset rank quantity threshold is R, and R is an integer greater than 1.

18. The measurement reporting method according to claim 12, wherein the method further comprises:
sending indication information, wherein the indication information indicates at least one of a candidate rank and a candidate precoding matrix.

19. The measurement reporting method according to claim 18, wherein the indication information indicates a CSI-RS resource configured for the first CSI, and there is an association relationship between a quantity of ports of the CSI-RS resource and a quantity of candidate ranks.

20. The measurement reporting method according to claim 18, wherein the indication information is one or more of the following: a CSI reporting configuration identifier, a CSI-RS resource identifier, and a CSI-RS resource configuration identifier that are configured for the first CSI; one or more of the CSI reporting configuration identifier, the CSI-RS resource identifier, and the CSI-RS resource configuration identifier are used to determine second CSI; and a rank of the first CSI is a rank of the second CSI, and/or a precoding matrix of the first CSI is a precoding matrix of the second CSI.

21. The measurement reporting method according to claim 20, wherein
the rank of the first CSI is a rank of second CSI closest to a first moment; and/or
the precoding matrix of the first CSI is a precoding matrix of the second CSI closest to the first moment.

22. The measurement reporting method according to claim 12, wherein
a rank of the first CSI is a rank used for downlink data channel transmission closest to a first moment; and/or
a precoding matrix of the first CSI is a precoding matrix used for downlink data channel transmission closest to the first moment.

23. A measurement reporting apparatus, comprising a transceiver unit and a processing unit, wherein
the transceiver unit is configured to receive first information, wherein the first information indicates feedback time of first channel state information CSI;
the processing unit is configured to: if the feedback time of the first CSI is after first time, feed back the first CSI based on the first information, wherein the first time is determined based on second time and a first processing delay, or the first time is determined based on the second time and a second processing delay;
the first processing delay is a CSI processing delay determined when a preset condition is met, the second processing delay is a CSI processing delay determined when the preset condition is not met, and the second processing delay is longer than the first processing delay; and
the second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

24. A measurement reporting apparatus, comprising a transceiver unit, wherein
the transceiver unit is configured to send first information, wherein the first information indicates feedback time of first channel state information CSI, the feedback time of the first CSI is after first time, and the first time is determined based on second time and a first processing delay or the first time is determined based on the second time and a second processing delay;
the first processing delay is a CSI processing delay determined when a preset condition is met, the second processing delay is a CSI processing delay determined when the preset condition is not met, and the second processing delay is longer than the first processing delay; and
the second time is time at which the first CSI starts to be measured, or an end moment of a last symbol of the first information, or a first symbol of a CSI measurement resource for measuring the first CSI, or a start moment of a computing processing unit occupied by the first CSI, or a start moment of a next symbol after the first information ends, or the second time is determined based on the first information.

25. A measurement reporting apparatus, comprising a processor, wherein the processor is coupled to a memory; the memory is configured to store a computer program; and
the processor is configured to execute the computer program stored in the memory, so that the measurement reporting apparatus implements the measurement reporting method according to any one of claims 1 to 11.

26. A measurement reporting apparatus, comprising a processor, wherein the processor is coupled to a memory;
the memory is configured to store a computer program; and
the processor is configured to execute the computer program stored in the memory, so that the measurement reporting apparatus implements the measurement reporting method according to any one of claims 12 to 22.

27. A communication system, wherein the communication system comprises the measurement reporting apparatuses according to claims 25 and 26.

28. A computer-readable storage medium, wherein the computer-readable storage medium comprises a computer program or instructions, and when the computer program or the instructions are run on a computer, the computer is enabled to perform the measurement reporting method according to any one of claims 1 to 11 or claims 12 to 22.

29. A computer program product, wherein the computer program product comprises a computer program or instructions, and when the computer program or the instructions are run on a computer, the computer is enabled to perform the measurement reporting method according to any one of claims 1 to 11 or claims 12 to 22.
